(19) Europäisches Patentamt / European Patent Office / Office européen des brevets

(11) EP 3 230 339 B1

(12) **EUROPEAN PATENT SPECIFICATION**

(45) Date of publication and mention of the grant of the patent:
**23.03.2022 Bulletin 2022/12**

(21) Application number: **15865291.7**

(22) Date of filing: **01.12.2015**

(51) International Patent Classification (IPC):
***C08G 59/68*** (2006.01) ***C08G 59/40*** (2006.01)
***C08J 5/24*** (2006.01) ***C08L 63/00*** (2006.01)

(52) Cooperative Patent Classification (CPC):
(C-Sets available)
**C08G 59/4021; C08G 59/42; C08G 59/5073; C08G 59/621; C08J 5/24; C08L 63/00;**
C08J 2363/02; C08J 2429/14 (Cont.)

(86) International application number:
**PCT/IB2015/002421**

(87) International publication number:
**WO 2016/087935 (09.06.2016 Gazette 2016/23)**

(54) **EPOXY RESIN COMPOSITION, PREPREG, FIBER-REINFORCED PLASTIC MATERIAL, AND MANUFACTURING METHOD FOR FIBER-REINFORCED PLASTIC MATERIAL**

EPOXIDHARZZUSAMMENSETZUNG, PREPREG, FASERVERSTÄRKTER KUNSTSTOFF UND HERSTELLUNGSVERFAHREN FÜR FASERVERSTÄRKTEN KUNSTSTOFF

COMPOSITION DE RÉSINE ÉPOXYDE, PRÉ-IMPRÉGNÉ, MATÉRIAU PLASTIQUE RENFORCÉ PAR DES FIBRES, ET PROCÉDÉ DE FABRICATION DE MATÉRIAU PLASTIQUE RENFORCÉ PAR DES FIBRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.12.2014 US 201462086428 P**
**29.10.2015 US 201562248012 P**

(43) Date of publication of application:
**18.10.2017 Bulletin 2017/42**

(73) Proprietor: **Toray Industries, Inc.**
**Tokyo 103-8666 (JP)**

(72) Inventors:
- **HUGHES, Jonathan**
  **Tacoma, WA 98446 (US)**
- **FUJIWARA, Takayuki**
  **Tacoma, WA 98446 (US)**

(74) Representative: **Mewburn Ellis LLP**
**Aurora Building**
**Counterslip**
**Bristol BS1 6BX (GB)**

(56) References cited:
**EP-A1- 1 279 688**
**WO-A1-2014/107725**
**WO-A1-2014/107725**
**JP-A- 2008 174 577**
**JP-A- 2012 052 083**
**JP-A- 2013 155 266**
**JP-A- 2013 213 168**
**US-A1- 2013 059 942**
**US-B2- 8 653 160**

- **None**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



**(Cont. next page)**

(52) Cooperative Patent Classification (CPC): (Cont.)

C-Sets
**C08L 63/00, C08L 29/04**

## Description

The present application provides a rapid curing epoxy resin composition for fiber-reinforced plastic materials that can be used with modern fast-cure heating systems without loss of heat resistance, surface quality, or mechanical properties of the cured epoxy matrix composite, as well as prepregs and fiber-reinforced plastic materials based thereon as their matrix resins.

## Background

Fiber Reinforced Plastic (FRP) materials comprising a reinforced fiber and a matrix resin have excellent mechanical properties such as strength and rigidity while being lightweight, and therefore are widely used as aircraft members, spacecraft members, automobile members, railway car members, ship members, sports apparatus members, and computer members such as housings for laptops. The demand for FRP materials is increasing year by year.

In particular, FRP materials have been recently developed for industrial applications such as automobile members, windmill members and pressure container members. However, the costs of these current materials are too high for these applications due to the high cost of manufacturing and raw materials.

A resin transfer molding method has been developed as a low cost manufacturing method. This resin transfer molding method is a method in which a reinforcing fiber base material is directly impregnated with a liquid thermosetting resin composition and cured. Since this method does not involve an intermediate product, such as a prepreg, it has great potential for molding cost reduction. However, FRP materials obtained by this method tend to have low strength and low stiffness due to low fiber content.

The prepreg lamination and molding method can prepare FRP materials having excellent mechanical strength and stiffness. The prepreg lamination and molding method is a method in which a prepreg or prepregs, produced by impregnating a reinforcing fiber base material with a thermosetting resin composition, is formed and laminated, followed by curing of the resin through the application of heat and pressure to the formed and laminated prepreg/prepregs to obtain a FRP material.

Epoxy resin compositions containing a dicyandiamide and an aromatic urea are also proposed in WO2014/107725A and EP1279688A.

Patent Documents U.S. Pat. No. 7,005,185 B2 and U.S. Publication No. 2003/0082385 A1 disclose matrix resins for the prepreg having a rapid curing property. However, FRP materials obtained from these have insufficient heat resistance for some of the painting processes used in the automotive industry. Furthermore, the minimum viscosities of these matrix resins are too high and the periods of times to achieve minimum viscosities (gel times) are too short. As the result, the flowability of the resins is insufficient in order to manufacture FRP materials having class A surfaces without complex cure cycles.

US8653160B proposes epoxy resin compositions for semiconductor encapsulation which contain clathrate complexes of aromatic carboxylic acids and imidazole compounds.

## Summary of the Invention

As a result of intensive studies aimed at solving the above-mentioned problems, the inventors have completed the present invention by discovering epoxy resin compositions having the constitutions as defined in claim 1. Namely, various embodiments of the present invention are as follows:

(1) An epoxy resin composition comprising:

- (a) at least one epoxy resin;
- (b) at least one dicyandiamide;
- (c) at least one aromatic urea; and
- (d) at least one clathrate complex comprising (d1) at least one compound selected from tetrakisphenol compounds and (d2) at least one epoxy accelerator selected from the group consisting of imidazoles and imidazolines.

(2) A prepreg comprising the epoxy resin composition of embodiment (1).

(3) A fiber-reinforced plastic material comprising the prepreg of embodiment (2), wherein the prepreg is cured.

## Detailed Description of Certain Embodiments of the Invention

The terms "approximately", "about" and "substantially" as used herein represent an amount close to the stated

amount that still performs the desired function or achieves the desired result. For example, the terms "approximately", "about", and "substantially" may refer to an amount that is within less than 10 % of, within less than 5 % of, within less than 1 % of, within less than 0.1 % of, or within less than 0.01 % of the stated amount.

The term "room temperature" as used herein has its ordinary meaning as known to those skilled in the art and may include temperatures within the range of about 15 °C to 43 °C.

The clathrate complex of the present invention is not particularly limited as long as it is a clathrate complex which contains a tetrakisphenol compound, such as a compound represented by formula (I), as a host compound and further contains an imidazole and/or imidazoline compound, such as a compound represented by formula (II), as a guest compound. It may also comprise a third component such as a solvent. In the present invention, the term clathrate complex (sometimes also referred to as an "inclusion catalyst") refers to a compound, which may be a crystalline compound, in which a host compound forms an inclusion lattice, and the host compound is combined or associated with a guest compound by a bond other than a covalent bond. The clathrate complex of the present invention comprising a tetrakisphenol compound (which may be represented by formula (I)) and an imidazole and/or imidazoline compound (which may be represented by formula (II)) and which may be referred to as an epoxy accelerator) can also be referred to as a salt formed from the carboxylic acid compound or the tetrakisphenol compound and the imidazole/imidazoline compound.

Without wishing to be bound by theory, it is believed that the clathrate complex functions as a latent, heat-activated cure accelerator for the epoxy resin composition, wherein the imidazole or imidazoline component of the complex becomes available for reaction or other interaction with the other components of the epoxy resin composition once the composition has been heated above a certain temperature.

The amount of the epoxy accelerator compound (which may be represented by formula (II)) may be in a range of 1 to 5 weight % of the epoxy resin composition, in order to impart suitable reactivity and storage stability to the epoxy resin composition. The amount of the carboxylic acid or tetrakisphenol compound in the epoxy resin composition will correspondingly depend upon the amount of epoxy accelerator compound which is desired to be provided into the formulated epoxy resin composition. That is, the quantity of clathrate compound is selected to be sufficient to supply the desired effective concentration of the imidazole and/or imidazoline compound (e.g., 1-5 weight % of the total epoxy resin composition).

In the present invention the epoxy resin composition comprises at least one clathrate complex formed with a tetrakisphenol compound with an imidazole or an imidazoline compound.

Carboxylic acid compounds can form a clathrate complex with an imidazole compound or an imidazoline compound (such as a compound represented by formula (II)). As used herein, the term "carboxylic acid compound" includes not only compounds containing one or more free carboxylic acid functional groups ($-CO_2H$), but also esters of carboxylic acids. A carboxylic acid compound can be represented by formula (IV):

$$R(COOH)_{n1} \qquad (IV)$$

The group R in formula (IV) will be described below; the group R will be indicated by the name of a monovalent group to which one carboxyl group is bonded. For a polyvalent carboxylic acid, the group R can be illustrated by a name suitably applied. In formula (IV), R may represent an aliphatic hydrocarbon group that optionally has at least one substituent, an alicyclic hydrocarbon group that optionally has at least one substituent, an aromatic hydrocarbon group that optionally has at least one substituent, or a heterocyclic group that optionally has at least one substituent, and n1 may represent any integer of 1 to 4. The term "aliphatic hydrocarbon group" encompasses an alkyl group, an alkenyl group and an alkynyl group. The hydrogen atom(s) in one or more of the functional group(s) COOH may be replaced by an aromatic hydrocarbon group that optionally has at least one substituent, an aliphatic hydrocarbon group that optionally has at least one substituent or a heterocyclic group that optionally has at least one substitutent to provide an ester.

Examples of an "alkyl group" include a methyl group, an ethyl group, an n-propyl group, an i-propyl group, an n-butyl group, an s-butyl group, an i-butyl group, a t-butyl group, an n-pentyl group, an n-hexyl group, a nonyl group, an i-nonyl group, a decyl group, a lauryl group, a tridecyl group, a myristyl group, a pentadecyl group, a palmityl group, a heptadecyl group, and a stearyl group. A C1-C6 alkyl group may be used.

Examples of an "alkenyl group" include a vinyl group, a 1-propenyl group, a 2-propenyl group, a 1-butenyl group, a 2-butenyl group, a 3-butenyl group, a 1-methyl-2-propenyl group, a 2-methyl-2-propenyl group, a 1-pentenyl group, a 2-pentenyl group, a 3-pentenyl group, a 4-pentenyl group, a 1-methyl-2-butenyl group, a 2-methyl-2-butenyl group, a 1-hexenyl group, a 2-hexenyl group, a 3-hexenyl group, a 4-hexenyl group, a 5-hexenyl group, a heptenyl group, an octenyl group, a decenyl group, a pentadecenyl group, an eicosenyl group, and a tricosenyl group. A C2-C6 alkenyl group may be used.

Examples of an "alkynyl group" include an ethynyl group, a 1-propynyl group, a 2-propynyl group, a 1-butynyl group, a 2-butynyl group, a 3-butynyl group, a 1-methyl-2-propynyl group, a 2-methyl-2-propynyl group, a 1-pentynyl group, a 2-pentynyl group, a 3-pentynyl group, a 4-pentynyl group, a 1-methyl-2-butynyl group, a 2-methyl-2-butynyl

group, a 1-hexynyl group, a 2-hexynyl group, a 3-hexynyl group, a 4-hexynyl group, a 5-hexynyl group, a 1-heptynyl group, a 1-octynyl group, a 1-decynyl group, a 1-pentadecynyl group, a 1-eicosynyl group, and a 1-tricosynyl group. A C2-C6 alkynyl group may be used.

The term "alicyclic hydrocarbon group" refers to a monocyclic or polycyclic alkyl group, alkenyl group, and the like, and examples thereof include a cyclopropyl group, a cyclobutyl group, a cyclopentyl group, a cyclohexyl group, a cycloheptyl group, a cyclooctyl group, a cyclododecyl group, a bicyclooctyl group, a bicycloheptyl group, a norbomyl group, an adamantyl group, a 2-cyclopropenyl group, a 2-cyclopentenyl group, and a 4-cyclohexenyl group. A C3-C8 cycloalkyl group may be used.

The term "aromatic hydrocarbon group" means a monocyclic or polycyclic aryl group. Here, in the case of a polycyclic aryl group, the term aromatic hydrocarbon group also encompasses a partially saturated group in addition to a fully unsaturated group. Examples thereof include a phenyl group, a naphthyl group, an azulenyl group, an indenyl group, an indanyl group, and a tetralinyl group. A C6-C10 aryl group may be used.

The term "heterocyclic group" means a 5- to 7-membered aromatic heterocycle, saturated heterocycle or unsaturated heterocycle having 1 to 4 nitrogen atoms, oxygen atoms or sulfur atoms as a hetero atom(s), or a condensed heterocycle in which any of these heterocycles is condensed with a benzene ring. Examples thereof include a furan-2-yl group, a furan-3-yl group, a thiophen-2-yl group, a thiophen-3-yl group, a pyrrol-1-yl group, a pyrrol-2-yl group, a pyridin-2-yl group, a pyridin-3-yl group, a pyridin-4-yl group, a pyrazin-2-yl group, a pyrazin-3-yl group, a pyrimidin-2-yl group, a pyrimidin-4-yl group, a pyridazin-3-yl group, a pyridazin-4-yl group, a 1,3-benzodioxol-4-yl group, a 1,3-benzodioxol-5-yl group, a 1,4-benzodioxan-5-yl group, a 1,4-benzodioxan-6-yl group, a 3,4-dihydro-2H-1,5-benzodioxepin-6-yl group, a 3,4-dihydro-2H-1,5-benzodioxepin-7-yl group, a 2,3-dihydrobenzofuran-4-yl group, a 2,3-dihydrobenzofuran-5-yl group, a 2,3-dihydrobenzofuran-6-yl group, a 2,3-dihydrobenzofuran-7-yl group, a benzofuran-2-yl group, a benzofuran-3-yl group, a benzothiophen-2-yl group, a benzothiophen-3-yl group, a quinoxalin-2-yl group, a quinoxalin-5-yl group, an indol-1-yl group, an indol-2-yl group, an isoindol-1-yl group, an isoindol-2-yl group, an isobenzofuran-1-yl group, an isobenzofuran-4-yl group, a chromen-2-yl group, a chromen-3-yl group, an imidazol-1-yl group, an imidazol-2-yl group, an imidazol-4-yl group, a pyrazol-1-yl group, a pyrazol-3-yl group, a thiazol-2-yl group, a thiazol-4-yl group, an oxazol-2-yl group, an oxazol-4-yl group, an isoxazol-3-yl group, an isoxazol-4-yl group, a pyrrolidin-2-yl group, a pyrrolidin-3-yl group, a benzoimidazol-1-yl group, a benzoimidazol-2-yl group, a benzothiazol-2-yl group, a benzothiazol-4-yl group, a benzoxazol-2-yl group, a benzoxazol-4-yl group, a quinolin-2-yl group, a quinolin-3-yl group, an isoquinolin-1-yl group, an isoquinolin-3-yl group, a 1,3,4-thiadiazol-2-yl group, a 1,2,3-triazol-1-yl group, a 1,2,3-triazol-4-yl group, a tetrazol-1-yl group, a tetrazol-2-yl group, an indolin-4-yl group, an indolin-5-yl group, a morpholin-4-yl group, a piperazin-2-yl group, a piperidin-2-yl group, a 1,2,3,4-tetrahydroquinolin-5-yl group, a 1,2,3,4-tetrahydroquinolin-6-yl group, a 1,2,3,4-tetrahydroisoquinolin-5-yl group, and a 1,2,3,4-tetrahydroisoquinolin-6-yl group.

Examples of the substituent in the case "that optionally has at least one substituent" include a C1-C6 alkyl group, a C1-C6 alkoxy group, a nitro group, a hydroxy group, or a group represented by the following formula:

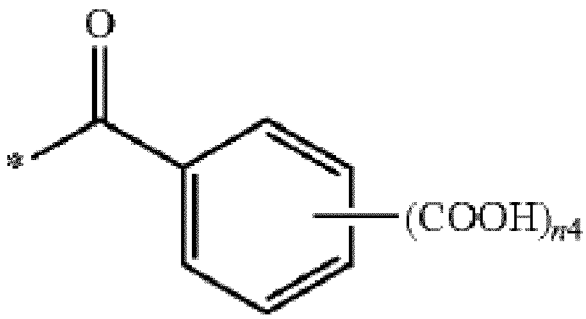

(wherein n4 represents an integer of 1 or 2, and * represents a bonding position).

Specific examples of suitable carboxylic acid compounds include the following compounds. Suitable aliphatic carboxylic acids include aliphatic di- to tetra-valent carboxylic acids and hydroxyl aliphatic polyvalent carboxylic acids and esters thereof. Representative examples thereof can include fumaric acid, 1,3-cyclohexanedicarboxylic acid, trans-1,4-cyclohexanedicarboxylic acid, succinic acid, malonic acid, tartaric acid, maleic acid, citric acid, malic acid, and adipic acid and esters thereof (e.g., C1-C6 alkyl esters). These aliphatic carboxylic acids may be used alone or in combination of two or more thereof.

Examples of suitable aromatic carboxylic acid compounds include the following compounds:

benzoic acid compounds such as benzoic acid, 2-methylbenzoic acid, 3-methylbenzoic acid, 4-methylbenzoic acid, 2-ethylbenzoic acid, 3-ethylbenzoic acid, 4-ethylbenzoic acid, 2-n-propylbenzoic acid, 3-n-propylbenzoic acid, 4-n-propylbenzoic acid, 2-butylbenzoic acid, 3-butylbenzoic acid, 4-butylbenzoic acid, 2-1-propylbenzoic acid, 3-1-propylbenzoic acid, 4-1-propylbenzoic acid, 2-1-butylbenzoic acid, 3-1-butylbenzoic acid, 4-1-butylbenzoic acid, 2-hydroxybenzoic acid, 3-hydroxybenzoic acid, 4-hydroxybenzoic acid, 4-isopropylbenzoic acid, 2-nitrobenzoic acid, 3-nitrobenzoic acid, 4-nitrobenzoic acid, methyl 2-nitrobenzoate, methyl 3-nitrobenzoate, methyl 4-nitrobenzoate, ethyl 2-nitrobenzoate, ethyl 3-nitrobenzoate, ethyl 4-nitrobenzoate, propyl 2-nitrobenzoate, propyl 3-nitrobenzoate, propyl 4-nitrobenzoate, butyl 2-nitrobenzoate, butyl 3-nitrobenzoate, butyl 4-nitrobenzoate, 2,3-dimethylbenzoic acid, 2,4-dimethylbenzoic acid, 2,5-dimethylbenzoic acid, 2,6-dimethylbenzoic acid, 3,4-dimethylbenzoic acid, 3,5-dimethylbenzoic acid, 2,3,4-trimethyl benzoic acid, 2,3,5-trimethyl benzoic acid, 2,4,5-trimethyl benzoic acid, 2,4,6-trimethyl benzoic acid, 3,4,5-trimethyl benzoic acid, 3,6-dimethylbenzoic acid, 4,5-dimethylbenzoic acid, 4,6-dimethylbenzoic acid, 2,3-diethylbenzoic acid, 2,4-diethylbenzoic acid, 2,5-diethylbenzoic acid, 2,6-diethylbenzoic acid, 3,4-diethylbenzoic acid, 3,5-diethylbenzoic acid, 3,6-diethylbenzoic acid, 4,5-diethylbenzoic acid, 4,6-diethylbenzoic acid, 2,3-dihydroxybenzoic acid, 2,4-dihydroxybenzoic acid, 2,5-dihydroxybenzoic acid, 2,6-dihydroxybenzoic acid, 3,4-dihydroxybenzoic acid, 3,5-dihydroxybenzoic acid, 3,6-dihydroxybenzoic acid, 4,5-dihydroxybenzoic acid, 4,6-dihydroxybenzoic acid, 2-hydroxy-3-methylbenzoic acid, 2-hydroxy-4-methylbenzoic acid, 2-hydroxy-5-methylbenzoic acid, 4-hydroxy-3-methoxybenzoic acid, 3-hydroxy-4-methoxybenzoic acid, 3,4-dimethoxybenzoic acid, 2,4-dimethoxybenzoic acid, 2,4-dihydroxy-6-methylbenzoic acid, 3,4,5-trihydroxybenzoic acid, 4-hydroxy-3,5-dimethoxybenzoic acid, 2,4,5-trimethoxybenzoic acid, 2-(carboxymethyl)benzoic acid, 3-(carboxymethyl)benzoic acid, 4-(carboxymethyl)benzoic acid, 2-(carboxycarbonyl) benzoic acid, 3-(carboxycarbonyl)benzoic acid, and 4-(carboxycarbonyl)benzoic acid, as well as esters thereof (e.g., C1-C6 alkyl esters); phthalic acid compounds such as phthalic acid, 3-methylphthalic acid, 4-methylphthalic acid, 5-methylphthalic acid, 6-methylphthalic acid, 3-ethylphthalic acid, 4-ethylphthalic acid, 5-ethylphthalic acid, 6-ethylphthalic acid, 3-n-propylphthalic acid, 4-n-propylphthalic acid, 5-npropylphthalic acid, 6-n-propylphthalic acid, 3-butylphthalic acid, 4-butylphthalic acid, 5-butylphthalic acid, 6-butylphthalic acid, 3-1-propylphthalic acid, 4-i-propylphthalic acid, 5-i-propylphthalic acid, 6-i-propylphthalic acid, 3-i-butylphthalic acid, 4-i-butylphthalic acid, 5-i-butylphthalic acid, 6-i-butylphthalic acid, 3-hydroxyphthalic acid, 4-hydroxyphthalic acid, 5-hydroxyphthalic acid, 6-hydroxyphthalic acid, 3,4-dihydroxyphthalic acid, 3,5-dihydroxyphthalic acid, 3,6-dihydroxyphthalic acid, 4,5-dihydroxyphthalic acid, 4,6-dihydroxyphthalic acid, 2,3-dimethoxyphthalic acid, 4,5-dimethoxyphthalic acid, 3-nitrophthalic acid, 4-nitrophthalic acid, 5-nitrophthalic acid, 6-nitrophthalic acid, 3,4-dimethylphthalic acid, 3,5-dimethylphthalic acid, 3,6-dimethylphthalic acid, 4,5-dimethylphthalicacid, and 4,6-dimethylphthalic acid as well as esters thereof (e.g., C1-C6 alkyl esters);

isophthalic acid compounds such as isophthalic acid, 2-methylisophthalic acid, 4-methylisophthalic acid, 5-methylisophthalic acid, 6-methylisophthalic acid, 2-ethylisophthalic acid, 4-ethylisophthalic acid, 5-ethylisophthalic acid, 6-ethylisophthalic acid, 2-n-propylisophthalic acid, 4-n-propylisophthalic acid, 5-n-propylisophthalic acid, 6-npropylisophthalic acid, 2-isopropylisophthalic acid, 4-isopropylisophthalic acid, 5-isopropylisophthalic acid, 6-isopropylisophthalic acid, 2-butylisophthalic acid, 4-butylisophthalic acid, 5-butylisophthalic acid, 6-butylisophthalic acid, 2-isobutylisophthalic acid, 4-isobutylisophthalic acid, 5-isobutylisophthalic acid, 6-isobutylisophthalic acid, 4-t-butylisophthalic acid, 5-t-butylisophthalic acid, 6-t-butylisophthalic acid, 2-hydroxyisophthalic acid, 4-hydroxyisophthalic acid, 5-hydroxyisophthalic acid, 6-hydroxyisophthalic acid, 2,4-dihydroxyisophthalic acid, 2,5-dihydroxylsophthalic acid, 2,6-dihydroxyisophthalic acid, 4,5-dihydroxyisophthalic acid, 4,6-dihydroxyisophthalic acid, 5,6-dihydroxyisophthalic acid, 2,4-dimethylisophthalic acid, 2,5-dimethylisophthalic acid, 2,6-dimethylisophthalic acid, 4,5-dimethylisophthalic acid, 4,6-dimethylisophthalic acid, 5,6-dimethylisophthalic acid, 2-nitroisophthalic acid, 4-nitroisophthalic acid, 5-nitroisophthalic acid, and 6-nitroisophthalic acid as well as esters thereof (e.g., C1-C6 alkyl esters); terephthalic acid compounds such as terephthalic acid, 2-methylterephthalic acid, 2-ethylterephthalic acid, 2-n-propylterephthalic acid, 2-isopropylterephthalic acid, 2-butylterephthalic acid, 2-isobutylterephthalic acid, 2-hydroxyterephthalic acid, 2,6-dihydroxyterephthalic acid, 2,6-dimethylterephthalic acid, and 2-nitroterephthalic acid; benzenetricarboxylic acid compounds such as 1,2,3-benzenetricarboxylic acid, 1,2,4-benzenetricarboxylic acid (trimellitic acid), 1,2,5-benzenetricarboxylic acid, 1,3,4-benzenetricarboxylicacid, 1,3,5-benzenetricarboxylic acid (trimesic acid), 4-hydroxy-1,2,3-benzenetricarboxylic acid, 5-hydroxy-1,2,3-benzenetricarboxylic acid, 3-hydroxy-1,2,4-benzenetricarboxylic acid, 5-hydroxy-1,2,4-benzenetricarboxylic acid, and 6-hydroxy-1 ,2,4-benzenetricarboxylic acid; tetracarboxylic acid compounds such as 1,2,3,4-benzenetetracarboxylic acid, 1,2,3,5-benzenetetracarboxylic acid, and 1,2,4,5-benzenetetracarboxylic acid (pyromellitic acid); and benzenehexacarboxylic acid as well as esters thereof (e.g., C1-C6 alkyl esters);

naphthoic acid compounds such as 1-naphthoic acid, 2-naphthoic acid, 2-methyl-1-naphthoic acid, 3-methyl-1-naphthoic acid, 4-methyl-1-naphthoic acid, 5-methyl-1-naphthoic acid, 6-methyl-1-naphthoic acid, 7-methyl-1-naphthoic acid, 8-methyl-1-naphthoic acid, 1-methyl-2-naphthoic acid, 3-methyl-2-naphthoic acid, 4-methyl-2-naphthoic acid, 5-methyl-2-naphthoic acid, 6-methyl-2-naphthoic acid, 7-methyl-2-naphthoic acid, 8-methyl-2-naphthoic acid, 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7 -naphthalenedicarboxylic acid, 1,8-naphthalenedicarboxylic acid, 2,3-naphthalenedicarboxylic acid, 2,4-naphthalenedicarboxylic acid, 2,5-naphthalenedicarboxylic

acid, 2,6-naphthalenedicarboxylic acid, 2,7-naphthalenedicarboxylicacid, 2,8-naphthalenedicarboxylic acid, 2-hydroxyl-1-naphthoic acid, 3-hydroxy-1-naphthoic acid, 4-hydroxy-1-naphthoic acid, 5-hydroxyl-1-naphthoic acid, 6-hydroxy-1-naphthoic acid, 7 - hydroxy-1-naphthoic acid, 8-hydroxy-1-naphthoic acid, 1-hydroxy-2-naphthoic acid, 3-hydroxy-2-naphthoic acid, 4-hydroxy-2-naphthoic acid, 5-hydroxy-2-naphthoic acid, 6-hydroxy-2-naphthoic acid, 7 -hydroxy-2-naphthoic acid, 8-hydroxy-2-naphthoic acid, 1,2,4,5-naphthalenetetracarboxylic acid, 2,3-dihydroxy-1-naphthoic acid, 2,4-dihydroxy-1-naphthoic acid, 2,5-dihydroxy-1-naphthoic acid, 2,6-dihydroxy-1-naphthoic acid, 2,7-dihydroxy-1-naphthoic acid, 2,8-dihydroxy-1-naphthoic acid, 3,4-dihydroxy-1-naphthoic acid, 3,5-dihydroxy-1-naphthoic acid, 3,6-dihydroxy-1-naphthoic acid, 3,7-dihydroxy-1-naphthoic acid, 3,8-dihydroxy-1-naphthoic acid, 4,5-dihydroxy-1-naphthoic acid, 4,6-dihydroxy-1-naphthoic acid, 4,7-dihydroxy-1-naphthoic acid, 4,8-dihydroxy-1-naphthoic acid, 5,6-dihydroxy-1-naphthoic acid, 5,7-dihydroxy-1-naphthoic acid, 5,8-dihydroxy-1-naphthoic acid, 6,7-dihydroxy-1-naphthoic acid, 6,8-dihydroxy-1-naphthoic acid, 7,8-dihydroxy-1-naphthoic acid, 1,3-dihydroxy-2-naphthoic acid, 1,4-dihydroxy-2-naphthoic acid, 1,5-dihydroxy-2-naphthoic acid, 1,6-dihydroxy-2-naphthoic acid, 1,7-dihydroxy-2-naphthoic acid, 1,8-dihydroxy-2-naphthoic acid, 3,4-dihydroxy-2-naphthoic acid, 3,5-dihydroxy-2-naphthoic acid, 3,6-dihydroxy-2-naphthoic acid, 3,8-dihydroxy-2-naphthoic acid, 4,5-dihydroxy-2-naphthoic acid, 4,6-dihydroxy-2-naphthoic acid, 4,7 -dihydroxy-2-naphthoic acid, 4,8-dihydroxy-2-naphthoic acid, 5,6-dihydroxy-2-naphthoic acid, 5,7 -dihydroxy-2-naphthoic acid, 5,8-dihydroxy-2-naphthoic acid, 6,7-dihydroxy-2-naphthoic acid, 6,8-dihydroxy-2-naphthoic acid, and 7,8-dihydroxy-2-naphthoic acid as well as esters thereof (e.g., C1-C6 alkyl esters);
cyclohexanecarboxylic acid compounds such as cyclohexanecarboxylic acid, 1,2-cyclohexanedicarboxylic acid, 1,3-cyclohexanedicarboxylic acid, 1,4-cyclohexanedicarboxylic acid, and 1,1-cyclohexanedicarboxylic acid; and naphthalenedicarboxylic acid compounds such as 1,2-decahydronaphthalenedicarboxylic acid, 1,3-decahydronaphthalenedicarboxylic acid, 1,4-decahydronaphthalenedicarboxylic 1,5-decahydronaphthalenedicarboxylic acid, 1,6-decahydronaphthalenedicarboxylic acid, 1,7-decahydronaphthalenedicarboxylic acid, and 1,8-decahydronaphthalenedicarboxylic acid as well as esters thereof (e.g., C1-C6 alkyl esters).

Examples of suitable heterocyclic carboxylic acids include, but are not limited to, furancarboxylic acid, thiophenecarboxylic acid, pyrrolecarboxylic acid, pyrazinecarboxylic acid, nicotinic acid, isonicotinic acid, and picolinic acid as well as esters thereof (e.g., C1-C6 alkyl esters). Among the above carboxylic acid derivatives, an aromatic (heterocyclic) carboxylic acid represented by the following formula (IV-1) or (IV-2) may be used:

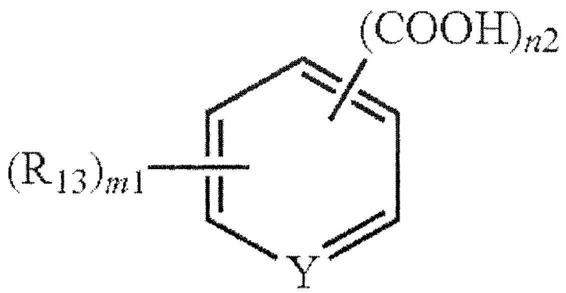

(IV-1)

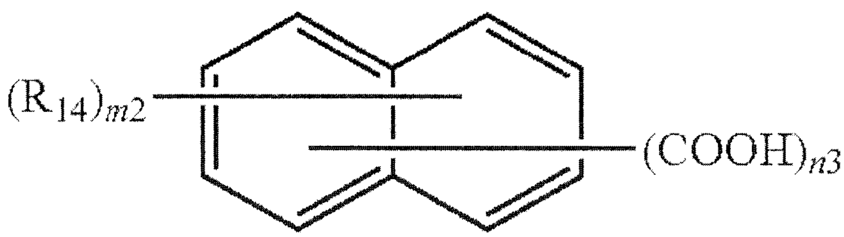

(IV-2)

R13 and R14 represent a C1-C6 alkyl group, a C1-C6 alkoxy group, a nitro group, a hydroxy group or a group represented by the following formula:

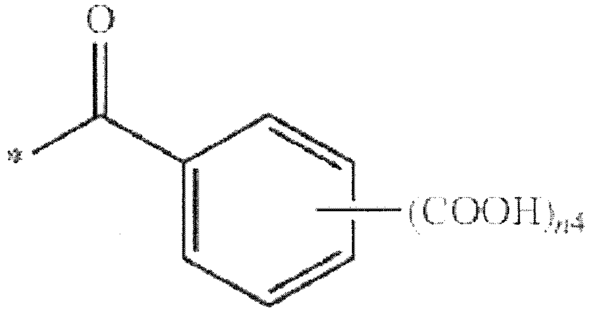

(wherein n4 represents an integer of 1 or 2, and * represents a bonding position); Y represents CH or a N atom; m1 represents any integer of O to 2; m2 represents any integer of 0 to 4; n2 represents any integer of 1 to 4; and n3 represents any integer of 1 to 4. The C1-C6 alkyl group may be a C1-C4 alkyl group, and optionally has a substituent. Specific examples of suitable C1-C6 alkyl groups include a methyl group, an ethyl group, a propyl group, an i-propyl group, a cyclopropyl group, a butyl group, an i-butyl group, an s-butyl group, a t-butyl group, a cyclobutyl group, a cyclopropylmethylgroup, a pentyl group, an i-pentyl group, a 2-methylbutyl group, a neopentyl group, a 1-ethylpropyl group, a hexyl group, an i-hexyl group, a 4-methylpentyl group, a 3-methylpentyl group, a 2-methylpentyl group, a 1-methylpentyl group, a 3,3-dimethylbutyl group, a 2,2-dimethylbutyl group, a 1,1-dimethylbutyl group, a 1,2-dimethylbutyl group, a 1,3-dimethyl butyl group, a 2,3-dimethylbutyl group, a 1-ethylbutyl group, and a 2-ethylbutyl group.

The C1-C6 alkoxy group may be a C1-C4 alkoxy group, and optionally may have at least one substituent. Specific examples of suitable C1-C6 alkoxy groups include a methoxy group, an ethoxy group, a propoxy group, an i-propoxy group, a butoxy group, an i-butoxy group, an s-butoxy group, a t-butoxy group, a pentoxy group, an i-pentoxy group, a 2-methylbutoxy group, a 1-ethylpropoxy group, a 2-ethylpropoxy group, a neopentoxy group, a hexyloxy group, a 4-methylpentoxy group, a 3-methylpentoxy group, a 2-methylpentoxy group, a 3,3-dimethylbutoxy group, a 2,2-dimethylbutoxy group, a 1,1-dimethylbutoxy group, a 1,2-dimethylbutoxy group, a 1,3-dimethylbutoxy group, and a 2,3 -dimethyl butoxy group. Among these, an isophthalic acid compound represented by formula (III) in particular may be used:

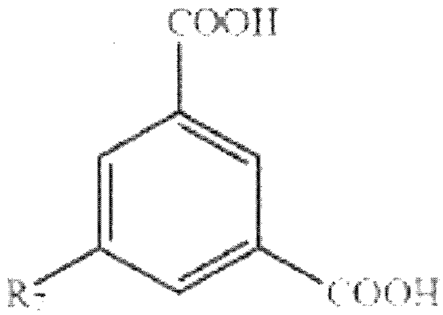

(III)

In the formula, R7 represents a C1-C6 alkyl group, a C1-C6 alkoxy group, a nitro group, or a hydroxy group. Examples of suitable C1-C6 alkyl groups and suitable C1-C6 alkoxy groups include the same groups as exemplified for R13 and R14 in formulae (IV-1) and (IV-2). Specifically, the isophthalic acid compound represented by formula (III) may be 5-hydroxyisophthalic acid or 5-nitroisophthalic acid.

Tetrakisphenol

The tetrakisphenol compound used in the present invention may be a compound represented by general formula (I).

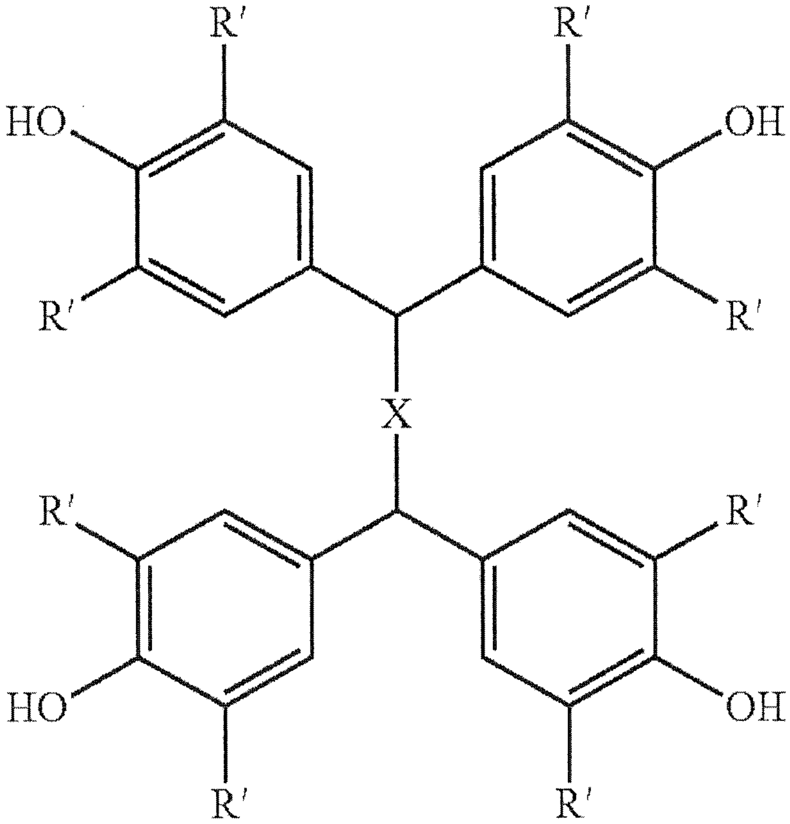

(I)

In the formula, X represents $(CH_2)_n$, n representing 0, 1, 2, or 3; each R' may be mutually the same or different from each other, and examples thereof can include a hydrogen atom, a C1-C6 lower alkyl group such as a methyl group, a propyl group, an i-propyl group, an n-butyl group, an i-butyl group, a t-butyl group, an n-hexyl group, and a cyclohexyl group, a phenyl group that may be substituted with a halogen atom, a lower alkyl group, and the like, a halogen atom such as a fluorine atom, a chlorine atom, a bromine atom, and an iodine atom, and a C1-C6 lower alkoxy group such as a methoxy group, an ethoxy group, and a t-butoxy group. The tetrakisphenol used in the present invention is not particularly limited but preferably is a compound represented by general formula (I), and specific examples thereof can include 1,1,2,2-tetrakis(4-hydroxyphenyl)ethane, 1,1,2,2-tetrakis(3-methyl-4-hydroxyphenyl)ethane, 1,1,2,2-tetrakis(3,5-dimethyl-4-hydroxyphenyl)ethane, 1,1,2,2-tetrakis(3-chloro-4-hydroxyphenyl)ethane, 1,1,2,2-tetrakis(3,5-dichloro-4-hydroxyphenyl)ethane, 1,1,2,2-tetrakis(3-bromo-4-hydroxyphenyl)ethane, 1,1,2,2-tetrakis(3,5-dibromo-4-hydroxyphenyl)ethane, 1,1,2,2-tetrakis(3-tbutyl-4-hydroxyphenyl)ethane, 1,1,2,2-tetrakis(3,5-di-tbutyl-4-hydroxyphenyl)ethane, 1,1,2,2-tetrakis(3-fluoro-4-hydroxyphenyl)ethane, 1,1,2,2-tetrakis(3,5-difluoro-4-hydroxyphenyl)ethane, 1,1,2,2-tetrakis(3-methoxy-4-hydroxyphenyl)ethane, 1,1,2,2-tetrakis(3,5-dimethoxy-4-hydroxyphenyl)ethane, 1,1,2,2-tetrakis(3-chloro-5-methyl-4-hydroxyphenyl)ethane, 1,1,2,2-tetrakis(3-bromo-5-methyl-4-hydroxyphenyl)ethane, 1,1,2,2-tetrakis(3-methoxy-5-methyl-4-hydroxyphenyl)ethane, 1,1,2,2-tetrakis(3-t-butyl-5-methyl-4-hydroxyphenyl)ethane, 1,1,2,2-tetrakis(3-chloro-5-bromo-4-hydroxyphenyl)ethane, 1,1,2,2-tetrakis(3-chloro-5-phenyl-4-hydroxyphenyl)ethane,1,1,2,2-tetrakis[( 4-hydroxy-3-phenyl)phenyl]ethane, 1,1,3,3-tetrakis(4-hydroxyphenyl)propane, 1,1,3,3-tetrakis(3-methyl-4-hydroxyphenyl)propane, 1,1,3,3-tetrakis(3,5-dimethyl-4-hydroxyphenyl)propane, 1,1,3,3-tetrakis(3-chloro-4-hydroxyphenyl)propane, 1,1,3,3-tetrakis(3,5-dichloro-4-hydroxyphenyl)propane, 1,1,3,3-tetrakis(3-bromo-4-hydroxyphenyl)propane, 1,1,3,3-tetrakis(3,5-dibromo-4-hydroxyphenyl)propane, 1,1,3,3-tetrakis(3-phenyl-4-hydroxyphenyl)propane, 1,1,3,3-tetrakis(3,5-diphenyl-4-hydroxyphenyl)propane, 1,1,3,3-tetrakis(3-methoxy-4-hydroxyphenyl)propane, 1,1,3,3-tetrakis(3,5-dimethoxy-4-hydroxyphenyl)propane, 1,1,3,3-tetrakis(3-t-butyl-4-hydroxyphenyl)propane, 1,1,3,3-tetrakis(3,5-di-t-butyl-4-hydroxyphenyl)propane, 1,1,4,4-tetrakis( 4-hydroxyphenyl) butane, 1,1,4,4-tetrakis(3-methyl-4-hydroxyphenyl)butane,1,1,4,4-tetrakis(3,5-dimethyl-4-hydroxyphenyl)butane, 1,1,4,4-tetrakis(3-chloro-4-hydroxyphenyl)butane, 1,1,4,4-tetrakis(3,5-dichloro-4-hydroxyphenyl)butane, 1,1,4,4-tetrakis(3-methoxy-4-hydroxyphenyl)butane, 1,1,4,4-tetrakis(3,5-dimethoxy-4-hydroxyphenyl)butane, 1,1,4,4-tetrakis(3-bromo-4-hydroxyphenyl)butane, 1,1,4,4-tetrakis(3,5-dibromo-4-hydroxyphenyl)butane, 1,1,4,4-tetrakis(3-tbutyl-4-hydroxyphenyl)butane, and 1,1,4,4-tetrakis(3,5-di-tbutyl-4-hydroxyphenyl)butane. These tetrakisphenol compounds may be used alone or in combinations of two or more thereof.

Imidazole/Imidazoline

The epoxy accelerator component of the clathrate complex is an imidazole or imidazoline. Combinations of different imidazoles, combinations of different imidazolines as well as combinations of one or more imidazoles and one or more imidazolines may be utilized. In one embodiment of the present invention, the epoxy accelerator is an imidazole compound or an imidazoline compound represented by the following formula (II).

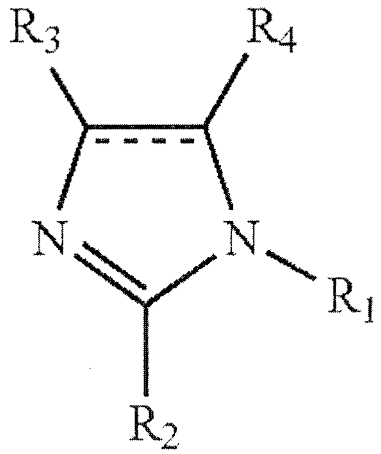

(II)

Specifically, in various embodiments of the invention, formula (II) may have a structure represented by the following:

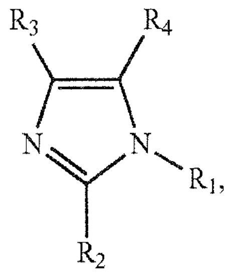

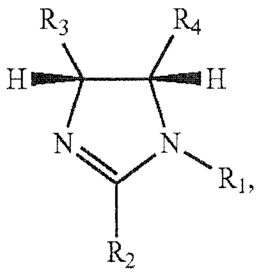

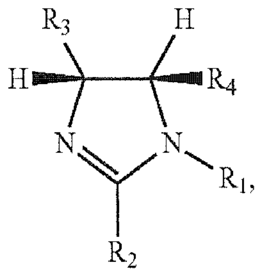

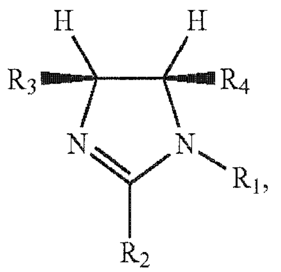

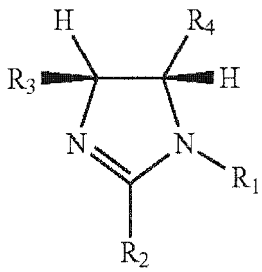

In the formula, $R_1$ represents a hydrogen atom, a C1-C10 alkyl group, an aryl group, an arylalkyl group, or a cyanoethyl group.

The C1-C10 alkyl group may be a C1-C6 alkyl group, and optionally has at least one substituent. Specific examples of suitable C1-C10 alkyl groups include a methyl group, an ethyl group, an n-propyl group, an i-propyl group, an n-butyl group, an s-butyl group, an i-butyl group, a t-butyl group, a n-pentyl group, a n-hexyl group, a nonyl group, an i-nonyl group, and a decyl group.

The aryl group may be a monocyclic or polycyclic aryl group. Here, in the case of a polycyclic aryl group, the term aryl group also encompasses a partially saturated group in addition to a fully unsaturated group. Examples thereof include a phenyl group, a naphthyl group, an azulenyl group, an indenyl group, an indanyl group, and a tetralinyl group. Among these groups, a C6-C10 aryl group may be used. Further, the aryl group optionally has one or more substituents. The term arylalkyl group means a group in which the aryl group and the alkyl group are combined with each other. Examples thereof include a benzyl group, a phenethyl group, a 3-phenyl-n-propyl group, a 1-phenyl-n-hexyl group, a

naphthalen-1-ylmethyl group, a naphthalen-2-ylethyl group, a 1-naphthalen-2-yl-n-propyl group, and an inden-1-ylmethyl group. Among these groups, a C6-C10 aryl/C1-C6 alkyl group may be used. Further, the arylalkyl group optionally may have one or more substituents.

$R_2$ to $R_4$ each independently represent a hydrogen atom, a nitro group, a halogen atom, a C1-C20 alkyl group, a C1-C20 alkyl group substituted with a hydroxy group, an aryl group, an arylalkyl group, or a C1-C20 acyl group. Examples of suitable C1-C20 alkyl groups include a methyl group, an ethyl group, an n-propyl group, an i-propyl group, an n-butyl group, an s-butyl group, an i-butyl group, a t-butyl group, an n-pentyl group, an n-hexyl group, a nonyl group, an i-nonyl group, a decyl group, a lauryl group, a tridecyl group, a myristyl group, a pentadecyl group, a palmityl group, a heptadecyl group, and a stearyl group. A C1-C10 alkyl group may be used. The aryl group and the arylalkyl group include the same groups as the groups for $R_1$. The term C1-C20 acyl group means a group in which a hydrogen atom, an alkyl group, an alkenyl group, an alkynyl group, an aryl group, a heteroaryl group, or the like is combined with a carbonyl group. Examples of suitable acyl groups include a formyl group; alkylcarbonyl groups such as an acetyl group, a propionyl group, a butyroyl group, a pentanoyl group, a hexanoyl group, a heptanoyl group, an octanoyl group, a nonanoyl group, a decanoyl group, a 3-methylnonanoyl group, an 8-methylnonanoyl group, a 3-ethyloctanoyl group, a 3,7-dimethyloctanoyl group, an undecanoyl group, a dodecanoyl group, a tridecanoyl group, a tetradecanoyl group, a pentadecanoyl group, a hexadecanoyl group, a 1-methylpentadecanoyl group, a 14-methylpentadecanoyl group, a 13,13-dimethyltetradecanoyl group, a heptadecanoyl group, a 15-methylhexadecanoyl group, an octadecanoyl group, a 1-methylheptadecanoyl group, a nonadecanoyl group, an eicosanoyl group, and a heneicosanoyl group; alkenylcarbonyl groups such as an acryloyl group, a methacryloyl group, an allyl carbonyl group, and a cinnamoyl group; alkynylcarbonyl groups such as an ethynylcarbonyl group and a propynylcarbonyl group; arylcarbonyl groups such as a benzoyl group, a naphthylcarbonyl group, a biphenylcarbonyl group, and an anthranilcarbonyl group; and heteroarylcarbonyl groups such as a 2-pyridylcarbonyl group and a thienylcarbonyl group. Among these groups, a C1-C20 acyl group (including a carbonyl group) and a C1-C6 acyl group may be used. Specific examples of suitable imidazole compounds represented by formula (II) include imidazole, 2-ethyl-4-methylimidazole, 2,4-dimethylimidazole, 1-methylimidazole, 2-methylimidazole, 4-methyl imidazole, 1-benzyl-2-methylimidazole, 2-heptadecylimidazole, 2-undecylimidazole, 2-phenyl-4-methyl-5-hydroxymethylimidazole, 2-phenylimidazole, 2-phenyl-4-methylimidazole, 1-benzyl-2-phenylimidazole, 1, 2-dimethylimidazole, 1-cyanoethyl-2-methyl imidazole, 1-cyanoethyl-2-ethyl-4-methylimidazole, 1-cyanoethyl-2-undecyl imidazole, 1-cyanoethyl-2-phenylimidazole, and 2-phenyl-4,5-dihydroxymethylimidazole. Examples of suitable imidazoline compounds represented by formula (II) include 2-methylimidazoline, 2-phenylimidazoline, 2-undecylimidazoline, 2-heptadecylimidazoline, 2-ethylimidazoline, 2-1-propylimidazoline, 2,4-dimethylimidazoline, and 2-phenyl-4-methylimidazoline, and 2-methylimidazoline or 2-phenylimidazoline may be used.

Examples of particular clathrate complexes suitable for use in the present invention include, but are not limited to: a complex of 1,1,2,2-tetrakis(4-hydroxyphenyl)ethane and 2-ethyl-4-methyl imidazole; a complex of 1,1,2,2-tetrakis(4-hydroxyphenyl)ethane and 2-phenyl-4-methyl-5-hydroxymethyl imidazole; a complex of 5-nitroisophthalic acid and 2-ethyl-4-methyl imidazole; a complex of 5-nitroisophthalic acid and 2-phenyl-4-methyl-5-hydroxymethyl imidazole; a complex of 5-hydroxyisophthalic acid and 2-ethyl-4-methyl imidazole; a complex of 5-hydroxyisophthalic acid and 2-phenyl-4-methyl-5-hydroxymethyl imidazole; and combinations thereof.

The ratio of the above-mentioned tetrakisphenol compound to the epoxy accelerator (imidazole, imidazoline) is not particularly limited so long as it is capable of providing a clathrate complex. However, in various embodiments of the invention, 0.1 to 5 moles (or 0.5 to 4 moles) of epoxy accelerator per 1 mole of the carboxylic acid/tetrakisphenol compound are present in the clathrate complex.

The clathrate complex may be supplied to the epoxy resin composition in particulate form. The particle size (average diameter) of the clathrate complex is not considered to be particularly limited and typically is from 0.01 microns to 80 microns; in other embodiments, the clathrate complex particle size is from 0.01 microns to 30 microns or 0.1 microns to 20 microns.

Clathrate complexes of the type suitable for use in the present invention, and methods for preparing such complexes, are known in the art and are described, for example, in the following U.S. patents: US Pat. Nos. 6,727,325; 8,653,160; and 8,735,529. Suitable clathrate complexes are also available from commercial sources such as, for example the Nissocure TIC-188 product sold by Nisso America Inc. Nisso America Inc, and its parent company, Nippon Soda, also supply other clathrate complexes which are suitable for use in the present invention. Mixtures (combinations) of different clathrate complexes may be employed in the present invention.

Epoxy Resin

In an embodiment, the epoxy resin is not particularly limited as long as the effect of the invention is not deteriorated. Mono-, di-functional, and higher functional (or multifunctional) epoxy resins and mixtures thereof could be used as the epoxy resin.

These epoxy resins (epoxies) may be prepared from precursors such as amines (e.g., epoxy resins prepared

using diamines and compounds containing at least one amine group and at least one hydroxyl group such as tetraglycidyl diaminodiphenyl methane, tetraglycidyl diaminodiphenylether, tetraglycidyl diaminodiphenylsulfone, tetraglycidyl diaminodiphenylamide, triglycidyl-p-aminophenol, triglycidyl-m-aminophenol, triglycidyl aminocresol and tetraglycidyl xylylenediamine and halogen-substituted products, alkynol-substituted products, hydrogenated products thereof and so on), phenols (e.g., bisphenol A epoxy resins, bisphenol F epoxy resins, bisphenol S epoxy resins, bisphenol R epoxy resins, phenol-novolac epoxy resins, cresol-novolac epoxy resins, resorcinol epoxy resins and triphenylmethane epoxy resins), naphthalene epoxy resins, dicyclopentadiene epoxy resins, epoxy resins having a biphenyl skeleton, isocyanate-modified epoxy resins, epoxy resins having a fluorene skeleton and compounds having a carbon-carbon double bond (e.g., alicyclic epoxy resins). It should be noted that the epoxy resins are not restricted to the examples above. Halogenated epoxy resins prepared by halogenating these epoxy resins can also be used. Furthermore, mixtures of two or more of these epoxy resins, and compounds having one epoxy group or monoepoxy compounds such as glycidylaniline, glycidyl toluidine or other glycidylamines (particularly glycidylaromatic amines) can be employed in the formulation of the thermosetting resin matrix.

Examples of commercially available products of tetraglycidyl diaminodiphenyl methane resins include "Sumiepoxy (registered trademark)" ELM434 (manufactured by Sumitomo Chemical Co., Ltd.), YH434L (manufactured by Nippon Steel Chemical Co., Ltd.), "jER (registered trademark)" 604 (manufactured by Mitsubishi Chemical Corporation), and "Araldite (registered trademark)" MY720 and MY721 (which are manufactured by Huntsman Advanced Materials).

An example of commercially available product of tetraglycidyl diaminodiphenylsulfone includes TG3DAS (manufactured by Konishi Chemical Ind. Co., Ltd.).

Examples of commercially available products of triglycidyl aminophenol or triglycidyl aminocresol resins include "Sumiepoxy (registered trademark)" ELM100 (manufactured by Sumitomo Chemical Co., Ltd.), "Araldite (registered trademark)" MY0500, MY0510, MY0600 and MY610 (which are manufactured by Huntsman Advanced Materials) and "jER (registered trademark)" 630 (manufactured by Mitsubishi Chemical Corporation).

Examples of commercially available products of tetraglycidyl xylylenediamine and hydrogenated products thereof include TETRAD-X and TETRAD-C (which are manufactured by Mitsubishi Gas Chemical Company, Inc.).

Examples of commercially available products of bisphenol A epoxy resins include "jER (registered trademark)" 825, "jER (registered trademark)" 828, "jER (registered trademark)" 834, "jER (registered trademark)" 1001, "jER (registered trademark)" 1002, "jER (registered trademark)" 1003, "jER (registered trademark)" 1003F, "jER (registered trademark)" 1004, "jER (registered trademark)" 1004AF, "jER (registered trademark)" 1005F, "jER (registered trademark)" 1006FS, "jER (registered trademark)" 1007, "jER (registered trademark)" 1009 and "jER (registered trademark)" 1010 (which are manufactured by Mitsubishi Chemical Corporation). Examples of commercially available products of the brominated bisphenol A epoxy resin include "jER (registered trademark)" 505, "jER (registered trademark)" 5050, "jER (registered trademark)" 5051, "jER (registered trademark)" 5054 and "jER (registered trademark)" 5057 (which are manufactured by Mitsubishi Chemical Corporation). Examples of commercially available products of the hydrogenated bisphenol A epoxy resin include ST5080, ST4000D, ST4100D and ST5100 (which are manufactured by Nippon Steel Chemical Co., Ltd.).

Examples of commercially available products of bisphenol F epoxy resins include "jER (registered trademark)" 806, "jER (registered trademark)" 807, "jER (registered trademark)" 4002P, "jER (registered trademark)" 4004P, "jER (registered trademark)" 4007P, "jER (registered trademark)" 4009P and "jER (registered trademark)" 4010P (which are manufactured by Mitsubishi Chemical Corporation), and "Epotohto (registered trademark)" YDF2001 and "Epotohto (registered trademark)" YDF2004 (which are manufactured by Nippon Steel Chemical Co., Ltd.). An example of a commercially available product of the tetramethyl-bisphenol F epoxy resin is YSLV-80XY (manufactured by Nippon Steel Chemical Co., Ltd.).

An example of a bisphenol S epoxy resin is "Epiclon (registered trademark)" EXA-154 (manufactured by DIC Corporation).

Examples of commercially available products of phenol-novolac epoxy resins include "jER (registered trademark)" 152 and "jER (registered trademark)" 154 (which are manufactured by Mitsubishi Chemical Corporation), and "Epiclon (registered trademark)" N-740, N-770 and N-775 (which are manufactured by DIC Corporation).

Examples of commercially available products of cresol-novolac epoxy resins include "Epiclon (registered trademark)" N-660, N-665, N-670, N-673 and N-695 (which are manufactured by DIC Corporation), and EOCN-1020, EOCN-102S and EOCN-104S (which are manufactured by Nippon Kayaku Co., Ltd.).

An example of a commercially available product of a resorcinol epoxy resin is "Denacol (registered trademark)" EX-201 (manufactured by Nagase chemteX Corporation).

Examples of commercially available products of naphthalene epoxy resins include HP-4032, HP4032D, HP-4700, HP-4710, HP-4770, EXA-4701, EXA-4750, EXA-7240 (which are manufactured by DIC Corporation)

Examples of commercially available products of triphenylmethane epoxy resins include "jER (registered trademark)" 1032S50 (which are manufactured by Mitsubishi Chemical Corporation), "Tactix (registered trademark)" 742 (manufactured by Huntsman Advanced Material) and EPPN-501H (which are manufactured by Nippon Kayaku Co., Ltd.).

Examples of commercially available products of dicyclopentadiene epoxy resins include "Epiclon (registered trademark)" HP7200, HP7200L, HP7200H and HP7200HH (which are manufactured by DIC Corporation), "Tactix (registered trademark)" 558 (manufactured by Huntsman Advanced Material), and XD-1000-1L and XD-1000-2L (which are manufactured by Nippon Kayaku Co., Ltd.).

Examples of commercially available products of epoxy resins having a biphenyl skeleton include "jER (registered trademark)" YX4000H, YX4000 and YL6616 (which are manufactured by Mitsubishi Chemical Corporation), and NC-3000 (manufactured by Nippon Kayaku Co., Ltd.).

Examples of commercially available products of isocyanate-modified epoxy resins include AER4152 (manufactured by Asahi Kasei Epoxy Co., Ltd.) and ACR1348 (manufactured by ADEKA Corporation) each of which has an oxazolidone ring.

Examples of commercially available products of epoxy resins having a fluorene skeleton include PG-100, CG-200 and EG-200 (which are manufactured by Osaka Gas Chemicals Co., Ltd and LME10169 (manufactured by Huntsman Advanced Material).

Examples of commercially available products of glycidylaniline include GAN (manufactured by Nippon Kayaku Co., Ltd.).

Examples of commercially available products of glycidyl toluidine include GOT (manufactured by Nippon Kayaku Co., Ltd.).

The epoxy resin may contain an epoxy resin where the glass transition temperature (Tg) of the epoxy resin is at least 120 °C or more or at least 150 °C or more when fully cured. Said fully cured resin is a cured resin where the cure degree is 95 % or more.

The epoxy resin may contain triglycidyl amines, tetraglycidyl amines, phenol-novolac epoxy resins, cresol-novolac epoxy resins, resorcinol epoxy resins, naphthalene epoxy resins, dicyclopentadiene epoxy resins, epoxy resins having a biphenyl skeleton, isocyanate-modified epoxy resins, alicyclic epoxy resins, triphenylmethane epoxy and epoxy resins having a fluorene skeleton, to provide high heat resistance when cured.

The epoxy resin may also contain triglycidyl amines, tetraglycidyl amines, naphthalene epoxy resins, epoxy resins having a biphenyl skeleton, isocyanate-modified epoxy resins, alicyclic epoxy resins, triphenylmethane epoxy resins and epoxy resins having a fluorene skeleton from view point of high heat resistance and mechanical properties.

The epoxy resin may also contain triglycidyl amines and tetraglycidyl amines from the view point of high heat resistance, mechanical properties and a surface quality of a FRP material which is comprised of the epoxy resin composition and a reinforced fiber.

In an embodiment, a first bisphenol epoxy resin may be contained as a component of the epoxy resin and is not particularly limited, if it is a material which is an epoxidized bisphenol.

Examples of the first bisphenol epoxy resin include bisphenol A epoxy resins, bisphenol F epoxy resins, bisphenol S epoxy resins, bisphenol R epoxy resins and halogen-substituted products, alkynol-substituted products, hydrogenated products thereof and so on. Furthermore, at least one epoxy resin selected from any of these epoxy resins can be used.

In some of the embodiments, the epoxy resin may contain a first bisphenol epoxy resin which has an EEW of 500 g/eq to 10000 g/eq or 500 g/eq to 1500 g/eq and is present in the amount of 10 to 40 PHR, or 10 to 25 PHR per 100 PHR of total epoxy resin. If the EEW is at least 500 g/eq, the cured epoxy resin composition may have high elongation properties and high impact resistance. If the EEW is no more than 5000 g/eq, the cured epoxy resin composition may have high heat resistance. The first bisphenol epoxy resin may have the EEW by itself and may be the combination of more than two bisphenol epoxies which have each EEW of more than 500. The method of average EEW calculation is described below. For example, when Wx PHR of epoxy resin of Ex (g/eq), Wy PHR of epoxy resin of Ey (g/eq) and Wz PHR of epoxy resin of Ez (g/eq) are combined, the average EEW can be calculated by the equation described below.

$$\text{The average EEW} = (Wx + Wy + Wz) / (Wx / Ex + Wy / Ey + Wz / Ez)$$

wherein W is equal to the weight percent of each epoxy resin and E refers to the EEW of the corresponding epoxy resin.

In other embodiments, the epoxy resin may contain a second bisphenol epoxy resin having an EEW of 150 to 200. If the second bisphenol epoxy is contained in the epoxy composition, the composition will be easier to impregnate into fibers to obtain the FRP material having a high strength. Furthermore, if the second bisphenol epoxy resin is contained in the epoxy resin composition, the first bisphenol epoxy resin may be compatible with other epoxy resins and/or a thermoplastic resin and may obtain a cured epoxy resin composition having complete uniform properties within the cured resin. In some embodiments, the epoxy resin may contain a first bisphenol epoxy resin which has an EEW of 500 g/eq to 1000 g/eq or 500 g/eq to 750 g/eq and is the amount of 10 to 40 PHR, or 10 to 25 PHR per 100 PHR of total epoxy resin. If the first bisphenol epoxy resin is used, the first bisphenol epoxy resin may be compatible with other epoxy resin and/or a thermoplastic resin and may obtain a cured epoxy resin composition having complete uniform properties within

the cured resin.

In the present invention, a dicyandiamide (or combination of dicyandiamides) is used as a curing agent. If the dicyandiamide is used as a curing agent, the epoxy resin composition has high storage stability and the cured epoxy resin composition has high heat resistance.

The amount of the dicyandiamide may be in the range of 3 to 7 PHR per 100 PHR of total epoxy resin. If the amount of the dicyandiamide is at least 3 PHR, the cured epoxy resin composition may have high heat resistance. If the amount of the dicyandiamide is no more than 7 PHR, the cured epoxy resin composition may have high elongation.

Examples of commercially available dicyandiamide products suitable for use in the present invention include DICY-7 and DICY-15 (which are manufactured by Mitsubishi Chemical Corporation) and "Dyhard (registered trademark)" 100S (manufactured by AlzChem Trostberg GmbH). A micronized grade of dicyandiamide is utilized in one embodiment of the present invention.

In other embodiments of the present invention, any curing agent other than the dicyandiamide may be also added to the epoxy resin composition, as long as the effect of the invention is not deteriorated. Examples of suitable curing agents include polyamides, amidoamines (e.g., aromatic amidoamines such as aminobenzamides, aminobenzanilides, and aminobenzenesulfonamides), aromatic diamines (e.g., diaminodiphenylmethane, diaminodiphenylsulfone [DDS]), aminobenzoates (e.g., trimethylene glycol di-p-aminobenzoate and neopentyl glycol di-p-amino-benzoate), aliphatic amines (e.g., triethylenetetramine, isophoronediamine), cycloaliphatic amines (e.g., isophorone diamine), imidazole derivatives, guanidines such as tetramethylguanidine, carboxylic acid anhydrides (e.g., methylhexahydrophthalic anhydride), carboxylic acid hydrazides (e.g., adipic acid hydrazide), phenol-novolac resins and cresol-novolac resins, carboxylic acid amides, polyphenol compounds, polysulfides and mercaptans, and Lewis acids and bases (e.g., boron trifluoride ethylamine, tris-(diethylaminomethyl) phenol). Furthermore, more than one of these curing agents may be used.

In the present invention, the aromatic urea is used as an accelerator for the reaction of an epoxy resin with a curing agent and/or the self-polymerization of epoxy resin. It has been discovered that if an aromatic urea is used as an accelerator, the epoxy resin composition has high storage stability and the cured epoxy resin composition has high heat resistance.

Without wishing to be bound by theory, it is believed that the clathrate complex and aromatic urea function together as latent, heat-activated cure accelerators for the epoxy resin composition, wherein the aromatic urea reduces the initial onset temperature for cure and the clathrate complex reduces the final temperature of cure thus reducing the total time for cure while maintaining the latency and processability of the epoxy resin composition.

The amount of the aromatic urea may be in the range of 0.5 to 7 PHR per 100 PHR of total epoxy resin. If the amount of the aromatic urea is at least 0.5 PHR, the cured epoxy resin composition may have high heat resistance. If the amount of the aromatic urea is no more than 7 PHR, the epoxy resin composition has high storage stability.

Suitable aromatic ureas include compounds containing at least one urea group (NC(=O)N) and at least one aromatic group (e.g., phenyl, substituted phenyl, naphthyl, etc.). In one embodiment, at least one aromatic ring is bonded directly to a nitrogen atom of a urea group. Examples of suitable aromatic ureas include N, N-dimethyl- N'- (3, 4-dichlorophenyl) urea, toluene bis (dimethylurea), 4, 4'-methylene bis (phenyl dimethylurea), N-(4-chlorophenyl) N, N dimethyl urea and 3-phenyl- 1, 1-dimethylurea. Examples of commercially available aromatic ureas include DCMU99 (manufactured by Hodogaya Chemical Co., Ltd.), and "Omicure (registered trademark)" 24, 24M, 52 and 94 (which are manufactured by CVC Thermoset Specialties). Among these, aromatic ureas having more than one urea group per molecule may be used in order to attain rapid curing properties. Mixtures (combinations) of two or more different aromatic ureas may be utilized.

In other embodiments of the present invention, any accelerator other than the aromatic urea may also be added, as long as the effect of the invention is not deteriorated. Examples of such accelerators include boron trifluoride piperidine, p-t-butylcatechol, sulfonate compounds (e.g., ethyl p-toluenesulfonate, isopropyl p-toluenesulfonate or methyl p-toluenesulfonate), tertiary amines and salts thereof, imidazoles and salts thereof, phosphorus curing accelerators, metal carboxylates and Lewis and Bronsted acids and salts thereof.

Examples of commercially available imidazole compounds or derivatives thereof include 2MZ, 2PZ and 2E4MZ (which are manufactured by Shikoku Chemicals Corporation). Examples of a suitable Lewis acid catalyst include complexes of a boron trihalide and a base, such as a boron trifluoride piperidine complex, boron trifluoride monoethyl amine complex, boron trifluoride triethanol amine complex, or boron trichloride octyl amine complex.

In certain embodiments of the present invention, any thermoplastic resin may be added to the epoxy resin composition, as long as the effect of the invention is not deteriorated. Examples of suitable thermoplastic resins include thermoplastic resins that are soluble in an epoxy resin and organic particles such as rubber particles and thermoplastic resin particles. As the thermoplastic resin that is soluble in an epoxy resin, a thermoplastic resin having a hydrogen-binding functional group, which may have an effect of improving the adhesion between a resin and a reinforcing fiber, may be used. Examples of thermoplastic resins which are soluble in an epoxy resin and have hydrogen-binding functional groups include thermoplastic resins having one or more alcoholic hydroxy groups, thermoplastic resins having one or more amide bonds, and thermoplastic resins having one or more sulfonyl groups.

Examples of thermoplastic resins having hydroxyl groups include polyvinyl acetal resins such as polyvinyl formal and polyvinyl butyral, polyvinyl alcohols and phenoxy resins. Examples of thermoplastic resins having amide bonds include polyamide, polyimide and polyvinyl pyrrolidone. An example of a thermoplastic resin having one or more sulfonyl groups is polysulfone. The polyamide, the polyimide and the polysulfone may have a functional group such as an ether bond and a carbonyl group in the main chain thereof. The polyamide may have a substituent on a nitrogen atom in the amide group.

Examples of commercially available thermoplastic resins soluble in an epoxy resin and having a hydrogen-binding functional group include: "Denkabutyral (registered trademark)" and "Denkaformal (registered trademark)" (which are manufactured by Denki Kagaku Kogyo Kabushiki Kaisha) and "Vinylec (registered trademark)" (manufactured by JNC Corporation) which are polyvinyl acetal resins; "UCAR (registered trademark)" PKHP (manufactured by Union Carbide Corporation) which is a phenoxy resin; "Macromelt (registered trademark)" (manufactured by Henkel-Hakusui Corporation) and "Amilan (registered trademark)" CM4000 (manufactured by Toray Industries Inc.) which are polyamide resins; "Ultem (registered trademark)" (manufactured by General Electric Co., Ltd.) and "Matrimid (registered trademark)" 5218 (manufactured by Ciba Inc.) which are polyimides; "Sumikaexcel (registered trademark)" (manufactured by Sumitomo Chemical Co., Ltd.) and "UDEL (registered trademark)" (manufactured by Solvay Advanced Polymers Kabushiki Kaisha) which are polysulfones; and "Luviskol (registered trademark)" (manufactured by BASF Japan Ltd.) which is polyvinyl pyrrolidone.

The acrylic resin has high incompatibility with an epoxy resin, and therefore may be used suitably for controlling viscoelasticity. Examples of commercially available products of the acrylic resin include "Dianal (registered trademark)" BR series (manufactured by Mitsubishi Rayon Co., Ltd.), "Matsumoto Microsphere (registered trademark)" M, M100 and M500 (which are manufactured by Matsumoto Yushi-Seiyaku Co., Ltd.), and "Nanostrength (registered trademark)" E40F, M22N and M52N (which are manufactured by Arkema).

Rubber particles may be also added. As for the rubber particles, crosslinked rubber particles and core-shell rubber particles produced by the graft polymerization of different polymers on the surfaces of crosslinked rubber particles may be used, from the viewpoint of handling properties.

Examples of commercially available crosslinked rubber particles include FX501P (manufactured by Japan Synthetic Rubber Corporation) which comprises a crosslinked product of a carboxyl-modified butadiene-acrylonitrile copolymer, and CX-MN series (manufactured by Nippon Shokubai Co., Ltd.) and YR-500 series (manufactured by Nippon Steel Chemical Co., Ltd.), each of which comprises acrylic rubber microparticles.

Examples of commercially available products of the core-shell rubber particles include "Paraloid (registered trademark)" EXL-2655 (manufactured by Kureha Corporation) which comprises a butadiene-alkyl methacrylate-styrene copolymer, "Staphyloid (registered trademark)" AC-3355 and TR-2122 (which are manufactured by Takeda Pharmaceutical Co., Ltd.), each of which comprises an acrylic acid ester-methacrylic acid ester copolymer, "PARALOID (registered trademark)" EXL-2611 and EXL-3387 (which are manufactured by Rohm & Haas) each of which comprises a butyl acrylate-methyl methacrylate copolymer, and "Kane Ace (registered trademark)" MX series (manufactured by Kaneka Corporation).

As for the thermoplastic resin particles, polyamide particles and polyimide particles may be used. Examples of suitable commercially available polyamide particles include SP-500 (manufactured by Toray Industries Inc.) and "Orgasol (registered trademark)" (manufactured by Arkema).

For certain embodiments of the present invention, any type of inorganic particle may be added, as long as the effect of the present invention is not deteriorated. Examples of suitable inorganic particles include metallic oxide particles, metallic particles and mineral particles. The inorganic particles may be used to improve some functions of the cured epoxy resin composition and to impart some functions to the cured epoxy resin composition. Examples of such functions include surface hardness, anti-blocking property, heat resistance, barrier property, conductivity, antistatic property, electromagnetic wave absorption, UV shield, toughness, impact resistance, and low coefficient of linear thermal expansion.

Examples of suitable metallic oxides include silicon oxide, titanium oxide, zirconium oxide, zinc oxide, tin oxide, indium oxide, aluminum oxide, antimony oxide, cerium oxide, magnesium oxide, iron oxide, tin-doped indium oxide (ITO), antimony-doped tin oxide and fluorine-doped tin oxide.

Examples of suitable metals include gold, silver, copper, aluminum, nickel, iron, zinc and stainless. Examples of suitable minerals include montmorillonite, talc, mica, boehmite, kaoline, smectite, xonotlite, vermiculite and sericite.

Examples of other suitable inorganic materials include carbon black, acetylene black, Ketjen black, carbon nanotubes, graphenes, aluminum hydroxide, magnesium hydroxide, glass beads, glass flakes and glass balloons.

Any size of inorganic particles may be used; for example, the inorganic particles may have a size which is in the range of 1 nm to 10 μm. Any shape inorganic particles may be used; for example, the inorganic particles may be spherical, needle, plate, balloon or hollow in shape. The inorganic particle may be just used as powder or used as a dispersion in a solvent like sol or colloid.

Furthermore, the surface of the inorganic particle may be treated by a coupling agent to improve the dispersibility and the interfacial affinity with the epoxy resin.

For various embodiments of the present invention, the epoxy resin composition may contain any other materials in addition to the materials mentioned above, as long as the effect of the present invention is not deteriorated. Examples of other materials include mold release agents, surface treatment agents, flame retardants, antibacterial agents, leveling agents, antifoaming agents, thixotropic agents, heat stabilizers, light stabilizers, UV absorbers, pigments, coupling agents and metal alkoxides.

In other embodiments of the present invention, the epoxy resin composition may reach a cure degree of at least 10 % after heating at 163 °C for 0.5 minutes or a cure degree of at least 50 % after heating at 163 °C for 5 minutes or less, thereby making possible the production of a FRP material at a high rate.

The cure degree of an epoxy resin composition can be determined empirically by measuring the torque increase or S' of the resin during the cure cycle, where 100 % cure degree is equal to the point where the torque ($S'_{final}$) increase equilibrates and stops increasing at the cure temperature. The $S'_{final}$ may be measured using a Dynamic Mechanical Rheological Tester (for example, APA2000 manufactured by Alpha Technologies) by heating from room temperature to 163°C at a rate of 50 °C/min and holding for a minimum of 30 minutes at 163 °C. $S'_{final}$ is taken at the point where the S' begins to increase less than 2 over 1 minute. This point can be considered the point of 100 % cure. Then, the cure degree can be determined at any time during the cure by using the S' value at that point (S't). Then the cure degree of the cured epoxy resin composition is calculated using the equation described below.

$$Cure\ Degree = 100 - \left[\left(S'_{final} - S'_{t}\right) X \frac{100}{S'_{final}}\right]$$

In other embodiments of the present invention, the epoxy resin composition may have a viscosity increase less than 3 times the starting viscosity when held at 65°C for 2 hours. Such a characteristic is advantageous from the viewpoint of the manufacturability of fiber-reinforced prepregs.

In the present invention, viscosity refers to the complex viscoelastic modulus $\eta^*$ as measured at a frequency of 0.5 Hz and a gap length of 1 mm using a dynamic viscoelastic measuring device (ARES, manufactured by TA Instruments) and circular parallel plates 40 mm in diameter as the temperature is monotonically increased at a rate of 2 °C/min.

The "viscosity increase" of the resin is measured by setting the parameters of the viscoelastic device (ARES, manufactured by TA Instruments) per the same method for viscosity measurement and holding the temperature at 65°C for 2hours. The viscosity increase is calculated using the equation below:

$$Viscosity\ Increase = \frac{\eta^*_{final}}{\eta^*_{initial}}$$

$\eta^*_{initial}$ is the initial viscosity of the resin at 65°C $\eta^*_{final}$ is the final viscosity of the resin after 2 hours at 65°C If the viscosity increase is less than 3 over 2 hours, the latency is considered good.

The glass transition temperatures (Tgs) of the cured epoxy resin compositions of this specification are measured by the method described below. A specimen measuring 10 mm in width and 60 mm in length is cut from a cured epoxy resin composition plate. The specimen is then subjected to the measurement of a Tg in 1.0 Hz torsion mode using a dynamic viscoelasticity measuring device (ARES, manufactured by TA Instruments) by heating it to temperatures of 50 °C to 250 °C at a rate of 5 °C/min in accordance with SACMA SRM 18R-94. The Tg is determined by finding the intersection between the tangent line of the glass region and the tangent line of the transition region from the glass region to the rubber region on the temperature-storage elasticity modulus curve, and the temperature at that intersection was considered to be the glass transition temperature also called the G' Tg.

Embodiments of the cured epoxy resin composition may have one or more viscous modulus (G") peaks. The height of each peak is calculated by subtracting the peak height in MPa by the corresponding valley that precedes the peak. If the height of any one of these peaks is less than 15 MPa, then the corresponding transition on the G' curve is not used to calculate the Tg.

In the present invention, the Tg of the FRP material is measured by the same method as the cured epoxy resin composition Tg measurement method using FRP materials having a thickness of approximately 0.6mm.

When the epoxy resin composition of the present invention is used as the matrix resin of a prepreg, the viscosity of the composition at 80 °C may be 0.5 to 200 Pa • s and in other embodiments from 5 to 50 Pa • s, in order to improve processability, including tackiness and drapability.

When the epoxy resin composition of the present invention is used as the matrix resin of a prepreg, a minimum

viscosity of the epoxy resin composition may be no more than 50 mPa·s in order to achieve a class A surface in the FRP material. Furthermore, a period of a time needed to reach the minimum viscosity of the epoxy resin composition should be at least 36 min, which also facilitates the attainment of a class A surface in the FRP material.

It may be that in certain embodiments of the invention, a cured epoxy resin composition with a modulus of 2.5 to 5.0 GPa is produced. If the modulus is at least 2.5 GPa, the FRP material may have high strength. If the modulus is no more than 5.0 GPa, the FRP material may have high impact resistance.

It may be that in certain embodiments of the invention, the cured epoxy resin composition has a resin toughness ($K_{Ic}$) of at least 0.4 MPa·$m^{0.5}$, and in other embodiments at least 0.6 MPa·$m^{0,5}$ and in other embodiments at least 0.8 MPa·$m^{0.5}$. If the resin toughness is at least 0.4 MPa·$m^{0.5}$, the FRP material may have high impact resistance.

In the preparation of the epoxy resin composition of the present invention, a kneader, planetary mixer, triple roll mill, twin screw extruder, and the like may advantageously be used. After the epoxy resins are placed in the equipment, the mixture is heated to a temperature in the range of from 130 to 180 °C while being stirred so as to uniformly dissolve the epoxy resins. During this process, other components, excluding the curing agent and curing accelerator, (e.g. thermoplastic, inorganic particles) may be added to the epoxy resins and kneaded with them. After this, the mixture is cooled down to a temperature of no more than 100 °C in some embodiments, no more than 80 °C in other embodiments or no more than 60 °C in still other embodiments, while being stirred, followed by the addition of the curing agent and curing accelerator (including the dicyandiamide, aromatic urea and clathrate complex) and kneading to disperse those components. This method may be used to provide an epoxy resin composition with excellent storage stability.

Next, FRP materials are described. By curing embodiments of the epoxy resin composition after impregnating reinforcing fibers with it, a FRP material that contains, as its matrix resin, embodiments of the epoxy resin composition in the form of a cured product may be obtained.

There are no specific limitations or restrictions on the type of reinforcing fiber used under the present invention, and a wide range of fibers, including glass fiber, carbon fiber, graphite fiber, aramid fiber, boron fiber, alumina fiber and silicon carbide fiber, may be used. At least one reinforced fiber of these reinforcing fibers may be mixed and put to use. Carbon fiber may provide FRP materials that are particularly lightweight and stiff. Carbon fibers with a tensile modulus of 230 to 800 GPa may be used, for example. If a carbon fiber with a high modulus of 230 to 800 GPa is combined with an epoxy resin composition of the present invention, a desirable balance of stiffness, strength and impact resistance may be achieved in the FRP material.

There are no specific limitations or restrictions on the form of reinforcing fiber, and fibers with diverse forms may be used, including, for instance, long fibers (drawn in one direction), tow, fabrics, mats, knits, braids, and short fibers (chopped into lengths of less than 10 mm). Here, long fibers mean single fibers or fiber bundles that are effectively continuous for at least 10 mm. Short fibers, on the other hand, are fiber bundles that have been chopped into lengths of less than 10 mm. Fiber configurations in which reinforcing fiber bundles have been aligned in the same direction may be suitable for applications where a high specific strength and specific modulus are required.

FRP materials of the present invention may be manufactured using methods such as the prepreg lamination and molding method, resin transfer molding method, resin film infusion method, hand lay-up method, sheet molding compound method, filament winding method and pultrusion method, though no specific limitations or restrictions apply in this respect.

The resin transfer molding method is a method in which a reinforcing fiber base material is directly impregnated with a liquid thermosetting resin composition and cured. Since this method does not involve an intermediate product, such as a prepreg, it has great potential for molding cost reduction and is advantageously used for the manufacture of structural materials for spacecraft, aircraft, rail vehicles, automobiles, marine vessels and so on.

The prepreg lamination and molding method is a method in which a prepreg or prepregs, produced by impregnating a reinforcing fiber base material with a thermosetting resin composition, is/are formed and/or laminated, followed by the curing of the resin through the application of heat and pressure to the formed and/or laminated prepreg/prepregs to obtain a FRP material.

The filament winding method is a method in which one to several tens of reinforcing fiber rovings are drawn together in one direction and impregnated with a thermosetting resin composition as they are wrapped around a rotating metal core (mandrel) under tension at a predetermined angle. After the wraps of rovings reach a predetermined thickness, it is cured and then the metal core is removed.

The pultrusion method is a method in which reinforcing fibers are continuously passed through an impregnating tank filled with a liquid thermosetting resin composition to impregnate them with the thermosetting resin composition, followed by a squeeze die and heating die for molding and curing, by continuously drawing them using a tensile machine. Since this method offers the advantage of continuously molding FRP materials, it is used for the manufacture of FRP materials for fishing rods, rods, pipes, sheets, antennas, architectural structures, and so on.

Of these methods, the prepreg lamination and molding method may be used to give excellent stiffness and strength to the FRP materials obtained.

Prepregs may contain embodiments of the epoxy resin composition and reinforcing fibers. Such prepregs may

be obtained by impregnating a reinforcing fiber base material with an epoxy resin composition of the present invention. Impregnation methods include the wet method and hot melt method (dry method).

The wet method is a method in which reinforcing fibers are first immersed in a solution of an epoxy resin composition, created by dissolving the epoxy resin composition in a solvent, such as methyl ethyl ketone or methanol, and retrieved, followed by the removal of the solvent through evaporation via an oven, etc. to impregnate reinforcing fibers with the epoxy resin composition. The hot-melt method may be implemented by impregnating reinforcing fibers directly with an epoxy resin composition, made fluid by heating in advance, or by first coating a piece or pieces of release paper or the like with an epoxy resin composition for use as resin film and then placing a film over one or either side of reinforcing fibers as configured into a flat shape, followed by the application of heat and pressure to impregnate the reinforcing fibers with the resin. The hot-melt method may give the prepreg having virtually no residual solvent in it.

The reinforcing fiber cross-sectional density of a prepreg may be 50 to 200 g/$m^2$. If the cross-sectional density is at least 50 g/$m^2$, there may be a need to laminate a small number of prepregs to secure the predetermined thickness when molding a FRP material and this may simplify lamination work. If, on the other hand, the cross-sectional density is no more than 200 g/$m^2$, the drapability of the prepreg may be good. The reinforcing fiber mass fraction of a prepreg may be 60 to 90 mass% in some embodiments, 65 to 85 mass% in other embodiments or even 70 to 80 mass% in still other embodiments. If the reinforcing fiber mass fraction is at least 60 mass%, there is sufficient fiber content, and this may provide the advantage of a FRP material in terms of its excellent specific strength and specific modulus, as well as preventing the FRP material to generate too much heat during the curing time. If the reinforcing fiber mass fraction is no more than 90 mass%, impregnation with the resin may be satisfactory, decreasing a risk of a large number of voids forming in the FRP material.

To apply heat and pressure under the prepreg lamination and molding method, the press molding method, autoclave molding method, bagging molding method, wrapping tape method, internal pressure molding method, or the like may be used as appropriate.

The autoclave molding method is a method in which prepregs are laminated on a tool plate of a predetermined shape and then covered with bagging film, followed by curing, performed through the application of heat and pressure while air is drawn out of the laminate. It may allow precision control of the fiber orientation, as well as providing high-quality molded materials with excellent mechanical characteristics, due to a minimum void content. The pressure applied during the molding process may be 0.3 to 1.0 MPa, while the molding temperature may be in the 90 to 200 °C range.

The wrapping tape method is a method in which prepregs are wrapped around a mandrel or some other cored bar to form a tubular FRP material. This method may be used to produce golf shafts, fishing poles and other rod-shaped products. In more concrete terms, the method involves the wrapping of prepregs around a mandrel, wrapping of wrapping tape made of thermoplastic film over the prepregs under tension for the purpose of securing the prepregs and applying pressure to them. After curing of the resin through heating inside an oven, the cored bar is removed to obtain the tubular body. The tension used to wrap the wrapping tape may be 20 to 78 N. The molding temperature may be in the 80 to 200 °C range.

The internal pressure forming method is a method in which a preform obtained by wrapping prepregs around a thermoplastic resin tube or some other internal pressure applicator is set inside a metal mold, followed by the introduction of high pressure gas into the internal pressure applicator to apply pressure, accompanied by the simultaneous heating of the metal mold to mold the prepregs. This method may be used when forming objects with complex shapes, such as golf shafts, bats, and tennis or badminton rackets. The pressure applied during the molding process may be 0.1 to 2.0 MPa. The molding temperature may be between room temperature and 200 °C or in the 80 to 180 °C range.

The FRP material produced from the prepreg of the present invention may have a class A surface as mentioned above. The class A surface means the surface that exhibit extremely high finish quality characteristics free of aesthetic blemishes and defects.

FRP materials that contain cured epoxy resin compositions obtained from epoxy resin compositions of the present invention and reinforcing fibers are advantageously used in sports applications, general industrial applications, and aeronautic and space applications. Concrete sports applications in which these materials are advantageously used include golf shafts, fishing rods, tennis or badminton rackets, hockey sticks and ski poles. Concrete general industrial applications in which these materials are advantageously used include structural materials for vehicles, such as automobiles, bicycles, marine vessels and rail vehicles, drive shafts, leaf springs, windmill blades, pressure vessels, flywheels, papermaking rollers, roofing materials, cables, and repair/reinforcement materials.

Tubular FRP materials produced by curing prepregs of the present invention into tubular shape are advantageously used for golf shafts, fishing rods, and the like.

## Examples

The present embodiments are now described in more detail by way of examples. The measurement of various properties was carried out using the methods described below. Those properties were, unless otherwise noted, measured

under environmental conditions comprising a temperature of 23 °C and a relative humidity of 50%.The components used in examples and comparative examples are as follows. Reference Examples 1 and 2 are for information only; they do not illustrate claim 1.

Epoxy resin

Tetraglycidyl diaminodiphenylmethane, Araldite (registered trademark) MY9655T having an epoxide equivalent weight (EEW) of 126g/eq (manufactured by Huntsman Advanced Materials)
Bisphenol A epoxy resin, "Epon (registered trademark)" 3002 having an epoxide equivalent weight (EEW) of 555 g/eq (manufactured by Momentive Specialty Chemicals)
Bisphenol A epoxy resin, "Epon (registered trademark)" 2005 having an epoxide equivalent weight (EEW) of 1300 g/eq (manufactured by Momentive Specialty Chemicals)
Bisphenol A epoxy resin, "Epon (registered trademark)" 828 having an epoxide equivalent weight (EEW) of 187 g/eq (manufactured by Momentive Specialty Chemicals)

Hardener

Dicyandiamide, "Dyhard (registered trademark)" 100S (manufactured by AlzChem Trostberg GmbH)
4, 4' - Diaminodiphenylsulfone (DDS), (manufactured by Wakayama Seika Kogyo Co., Ltd.)

Accelerator

2, 4'-Toluene bis dimethyl urea, "Omicure (registered trademark)" U-24M (manufactured by CVC Thermoset Specialties)

Clathrate Complex

Complex of 1,1,2,2-tetrakis(4-hydroxyphenyl)ethane and 2-phenyl-4-methyl-5-hydroxymethylimidazole, Nissocure® TIC-188 (manufactured by Nisso America Inc.)
Complex of 5-hydroxy isophthalic acid (HIPA) and 2-ethyl-4-methyl imidazole, HIPA-2E4MZ (manufactured by Nisso America Inc.)

Thermoplastic Resin

Poly Vinyl Formal, "Vinylec (registered trademark)" PVF-K (manufactured by JNC Corporation)

Carbon fibers

Carbon fiber, "Torayca (registered trademark)" T700G-24K-31E having a fiber filament count of 24,000, tensile strength of 4.9 GPa, tensile elasticity of 240 GPa, and tensile elongation of 2.0% (manufactured by Toray Industries Inc.)
The following measurement methods were used to measure the epoxy resin composition, the prepreg and the FRP material for each working example.

**(1) Epoxy resin viscosity**

A mixture was created by dissolving prescribed amounts of all the components other than the curing agent and curing accelerator in a mixer, and then prescribed amounts of the curing agent were mixed into the mixture along with prescribed amounts of the accelerator to obtain the epoxy resin composition.
The viscosity of the epoxy resin composition was measured using a dynamic viscoelasticity measuring device (ARES, manufactured by TA Instruments) using parallel plates while simply increasing the temperature at a rate of 2°C/min, with a strain of 100%, frequency of 0.5 Hz, and plate interval of 1 mm, from 50°C to 170°C.

### (2) Glass transition temperature of cured epoxy resin composition

The cured epoxy resin composition was molded by the method described below. After deforming under vacuum and high shear mixing, the epoxy resin composition prepared in (1) was injected into a mold set for a thickness of 2 mm using a 2 mm-thick "Teflon (registered trademark)" spacer. Then, the epoxy resin composition was cured in the conditions described below to obtain a 2 mm-thick plate-shaped cured resin composition. Condition 1: The epoxy resin composition was heated at a rate of 50 °C/min from room temperature to 163 °C and then kept for 0.5 minutes at 163 °C.
Condition 2: The epoxy resin composition was heated at a rate of 50 °C/min from room temperature to 163 °C and then kept for 2 minutes at 163 °C.

The specimen was then subjected to a Tg measurement in 1.0 Hz torsion mode using a dynamic viscoelasticity measuring device (ARES, manufactured by TA Instruments) by heating it to temperatures of 50 °C to 250 °C at a rate of 5 °C/min in accordance with SACMA SRM 18R-94.

Tg was determined by finding the intersection between the tangent line of the glass region and the tangent line of the transition region from the glass region to the rubber region on the temperature-storage elasticity modulus curve, and the temperature at that intersection was considered to be the glass transition temperature (also called the G' Tg).

However, when the cured resin composition has one or more viscous modulus (G") peaks, Tg was determined by the following method. The height of each peak was calculated by subtracting the peak height in MPa by the corresponding valley that precedes the peak. If the height of anyone of these peaks is over 15 MPa, then the corresponding transition on the G' curve was used to calculate the Tg.

### (3) Cure degree of cured epoxy resin composition

The cure degree of an epoxy resin composition can be determined empirically by measuring the torque increase or S' of the resin during the cure cycle, where the full cure or 100% cure degree is equal to the point where the torque ($S'_{final}$) increase equilibrates and stops increasing at the cure temperature. The $S'_{final}$ was measured using a Dynamic Mechanical Rheological Tester (APA2000 manufactured by Alpha Technologies) by heating from room temperature to 163°C at a rate of 40°C/min and holding for a minimum of 30 minutes at 163°C. $S'_{final}$ was taken at the point where the S' begins to increase less than 2 over 1 minute. This point can be considered the point of 100% cure. Then, the % cure degree can be determined at any time during the cure by using the S' value at that point ($S'_t$). Then the percent cure degree of the cured epoxy resin composition was calculated using the equation described below.

$$\%\ Cure\ Degree = 100 - \left[\left(S'_{final} - S'_t\right) X \frac{100}{S'_{final}}\right]$$

### (4) Toughness of cured epoxy resin composition

A specimen measuring 12.7 mm × 150 mm was cut from the cured epoxy resin composition obtained in (2). Then, the specimen was processed and tested using an Instron universal testing machine (made by Instron) in accordance with ASTM D5045 (1999). The introduction of an initial crack into the specimen was performed by placing a razor blade, cooled down to liquid nitrogen temperature, against the specimen and striking the back of the blade with a hammer to apply an impact force. Here, resin toughness refers to critical stress in deformation mode I (open mode). There were five specimens, and the average measurement (n = 5) was adopted as the resin toughness value.

**(5)** Glass transition temperature of FRP material

The epoxy resin composition prepared in (1) was applied onto release paper using a knife coater to produce two sheets of 52.0 $g/m^2$ resin film. Next, the aforementioned 2 sheets of fabricated resin film were overlaid on both sides of unidirectionally oriented carbon fibers with a density of 1.8 $g/cm^2$ in the form of a sheet (T700G-24K-31E) and the epoxy resin composition was impregnated using a roller temperature of 100 °C and a roller pressure of 0.07 MPa to produce a unidirectional prepreg with a carbon fiber area weight of 190 $g/m^2$ and an epoxy resin composition weight fraction of 35.4%.

Three plies of the unidirectional prepregs were laminated in a uniform fiber orientation. The laminated prepregs were covered with nylon film without any gaps and heated under pressure of 1 MPa at a rate of 50 °C/min from room temperature to 143 °C in a press and then kept for 3 minutes at 143 °C to obtain the 0.6 mm thick FRP plate.

The measurement method of FPR plate Tg was the same as (2) except using 0.6 mm thick FRP plate.

**(6) Surface quality of FRP material**

The surface quality of the FPR material in prepared in (6) was evaluated by the following method. An alignment disorder of the reinforced fiber, a defective portion of the cured epoxy resin composition and a void on the FRP material surface were observed visually. A surface without these defects is a high-quality surface. On the other hand, a surface with at least one of these defects is a defective surface.

**(7) Viscosity Measurement Method**

In other embodiments of the present invention, the epoxy resin composition may have a viscosity increase less than 3 times the starting viscosity when held at 65°C for 2 hours from viewpoint of processability for the manufacturing of prepreg.

In the present invention, viscosity refers to the complex viscoelastic modulus $\eta^*$ as measured at a frequency of 0.5 Hz and a gap length of 1 mm using a dynamic viscoelastic measuring device (ARES, manufactured by TA Instruments) and circular parallel plates 40 mm in diameter as the temperature is monotonically increased at a rate of 2 °C/min.

(Calculation method of viscosity increase)

The "viscosity increase" of the resin is measured by setting the parameters of the viscoelastic device (ARES, manufactured by TA Instruments) per the same method for viscosity measurement and holding the temperature at 65°C for 2 hours. The viscosity increase is calculated using the equation below:

$$Viscosity\ Increase = \frac{\eta^*_{final}}{\eta^*_{initial}}$$

$\eta^*_{initial}$ is the initial viscosity of the resin at 65°C

$\eta^*_{final}$ is the final viscosity of the resin after 2 hours at 65°C If the viscosity increase is less than 3 over 2 hours the latency is considered good.

**Working Examples 1 - 14 and Comparative Examples 1-6**

The various amounts of the components used for each example are stated in Tables 1 and 2. The epoxy resin compositions shown in Tables 1 and 2 were produced in accordance with the method described in (1).

The produced epoxy resin composition was cured by the methods described in (2). The results for each test are stated in Tables 1 and 2.

The FRP material was molded by the method described in (5). The results for each test are stated in Tables 1 and 2.

Examples 3 to 14 (Table 1) having the embodiments in accordance with the present invention provided good results. Reference Examples 1 and 2, which employ HIPA-2E4MZ, do not illustrate the invention.

The comparative examples in Table 2 show that the examples having only a urea complex, clathrate complex (inclusion catalyst) or a different curative than dicyandiamide did not provide as fast of a cure as the embodiments of the working examples.

Table 1.

| ITEM | | | EEW | UNIT | Working Examples 1 * | 2 * | 3 | 4 | 5 | 6 | 7 | 8 |
|---|---|---|---|---|---|---|---|---|---|---|---|---|
| Epoxy Resin | MY9655T | | 126 | Weight Parts | 50 | 50 | 50 | 50 | 50 | 50 | 50 | 50 |
| | Epon 828 | | 187 | Weight Parts | 30 | 30 | 30 | 30 | 30 | 30 | 30 | 30 |
| | Epon 3002 | | 555 | Weight Parts | | | | | | 20 | 20 | 20 |
| | Epon 2005 | | 1300 | Weight Parts | 20 | 20 | 20 | 20 | 20 | | | |
| | EPN1138 | | 178 | Weight Parts | | | | | | | | |
| Hardener | 4,4'-DDS | | | Weight Parts | | | | | | | | |
| | Dicyandiamide | | | Weight Parts | 5 | 5 | 5 | 5 | 5 | 5 | 5 | 5 |
| Aromatic urea | U-24M | | | Weight Parts | 3 | 3 | 3 | 3 | 3 | 3 | 3 | 2 |
| Inclusion catalyst | HIPA-2E4MZ | | | Weight Parts | 3 | 5 | | | | | | |
| | TIC-188 | | | Weight Parts | | | 1 | 3 | 5 | 3 | 5 | 7.0 |
| Thermoplastic Resin | PVF-K | | | Weight Parts | 5 | 5 | 5 | 5 | 5 | 5 | 5 | 5 |
| | Curing Condition 1 (163 °C×0.5 min.) | Cured resin Tg | | °C | 160 | 152 | 179 | 182 | 187 | 172 | 174 | 168 |
| | | Cure degree | | % | 51 | 44 | 36 | 56 | 67 | 24 | 50 | 27 |
| | Curing Condition 2 (163 °C×2.0 min.) | Cured resin Tg | | °C | 160 | 152 | 179 | 182 | 187 | 172 | 174 | 171 |
| | | Cure degree | | % | 51 | 44 | 36 | 56 | 67 | 24 | 50 | 68 |
| | | Viscosity Increase | | | good | good | good | good | good | good | good | good |

*Reference Examples

Table 1 (continued).

| ITEM | | EEW | Working Examples | | | | | | |
|---|---|---|---|---|---|---|---|---|---|
| | | | UNIT | 9 | 10 | 11 | 12 | 13 | 14 |
| Epoxy Resin | MY9655T | 126 | Weight Parts | | | | 10 | 10 | 10 |
| | Epon 828 | 187 | Weight Parts | 40 | 40 | 40 | 60 | 60 | 60 |
| | Epon 3002 | 555 | Weight Parts | | | | | | |
| | Epon 2005 | 1300 | Weight Parts | 20 | 20 | 20 | 30 | 30 | 30 |
| | EPN1138 | 178 | Weight Parts | 40 | 40 | 40 | | | |
| Hardener | 4,4'-DDS | | Weight Parts | | | | | | |
| | Dicyandiamide | | Weight Parts | 5 | 5 | 5 | 3 | 3 | 3 |
| Aromatic urea | U-24M | | Weight Parts | 3 | 3 | 3 | 3 | 3 | 3 |
| Inclusion catalyst | HIPA-2E4MZ | | Weight Parts | | | | | | |
| | TIC-188 | | Weight Parts | 3.0 | 5.0 | 7.0 | 3.0 | 5.0 | 7.0 |
| Thermoplastic Resin | PVF-K | | Weight Parts | 5 | 5 | 5 | 5 | 5 | 5 |
| | Curing Condition 1 (163 °C×0.5 min.) | Cured resin Tg | °C | 131 | 138 | 139 | 111 | 114 | 121 |
| | | Cure degree | % | 15 | 23 | 45 | 10 | 21 | 28 |
| | Curing Condition 2 (163 °C×2.0 min.) | Cured resin Tg | °C | 147 | 145 | 142 | 133 | 133 | 136 |
| | | Cure degree | % | 30 | 62 | 100 | 43 | 55 | 64 |
| | | Viscosity Increase | | good | good | good | good | good | good |

Table 2.

| ITEM | | EEW | UNIT | Comparative Examples 1 | 2 | 3 | 4 |
|---|---|---|---|---|---|---|---|
| Epoxy Resin | MY9655T | 126 | Weight Parts | 50 | 50 | 60 | 50 |
| | Epon 828 | 187 | Weight Parts | 30 | 30 | 20 | 30 |
| | Epon 2005 | 1300 | Weight Parts | 20 | 20 | 20 | 20 |
| | Epon 1138 | 178 | Weight Parts | | | | |
| Hardener | 4,4'-DDS | | Weight Parts | | | 40 | |
| | Dicyandiamide | | Weight Parts | 5 | 5 | | 5 |
| Aromatic urea | U-24M | | Weight Parts | 3 | | 4 | |
| Inclusion catalyst | HIPA-2E4MZ | | Weight Parts | | | | |
| | TIC-188 | | Weight Parts | | 1 | | 5 |
| Thermoplastic Resin | PVF-K | | Weight Parts | 5 | 5 | 5 | 5 |
| | Curing Condition 1 (163 °C×0.5 min.) | Cured resin Tg | °C | 179 | 70 | 100 | 120 |
| | | Cure degree | % | 4.0 | 0.0 | 0.0 | 4.1 |
| | Curing Condition 2 (163 °C×2.0 min.) | Cured resin Tg | °C | 182 | 78 | 120 | 141 |
| | | Cure degree | % | 56.0 | 0.5 | 0.1 | 55.0 |
| | | Viscosity Increase | | good | good | good | poor |

Table 2 (continued).

| ITEM | | EEW | Comparative Examples | | |
|---|---|---|---|---|---|
| | | | UNIT | 5 | 6 |
| Epoxy Resin | MY9655T | 126 | Weight Parts | | 10 |
| | Epon 828 | 187 | Weight Parts | 40 | 60 |
| | Epon 2005 | 1300 | Weight Parts | 20 | 30 |
| | EPN1138 | 178 | Weight Parts | 40 | |
| Hardener | 4,4'-DDS | | Weight Parts | | |
| | Dicyandiamide | | Weight Parts | 5 | 3 |
| Aromatic urea | U-24M | | Weight Parts | 3 | |
| | DCMU | | Weight Parts | | 3 |
| Inclusion catalyst | HIPA-2E4MZ | | Weight Parts | | |
| | TIC-188 | | Weight Parts | | |
| Thermoplastic Resin | PVF-K | | Weight Parts | 5 | 5 |
| | Curing Condition 1 (163 °C×0.5 min.) | Cured resin Tg | °C | 120 | 86 |
| | | Cure degree | % | 14.3 | 2.3 |
| | Curing Condition 2 (163 °C×2.0 min.) | Cured resin Tg | °C | 141 | 128 |
| | | Cure degree | % | 21.4 | 13.2 |
| | | Viscosity Increase | | good | good |

## Claims

1. An epoxy resin composition comprising:

   (a) at least one epoxy resin;
   (b) at least one dicyandiamide;
   (c) at least one aromatic urea; and
   (d) at least one clathrate complex comprising (d1) at least one compound selected from tetrakisphenol compounds and (d2) at least one epoxy accelerator selected from the group consisting of imidazoles and imidazolines.

2. The epoxy resin composition according to claim 1, wherein the at least one epoxy accelerator includes an imidazole compound or an imidazoline compound selected from the group consisting of imidazole, 2-ethyl-4-methylimidazole, 1-methylimidazole, 2-methylimidazole, 4-methylimidazole, 1,2-dimethylimidazole, 1-benzyl-2-methylimidazole, 2-heptadecylimidazole, 2-undecylimidazole, 2-phenylimidazole, 2-phenyl-4-methyl-5-hydroxymethylimidazole, 2-methylimidazoline and 2-phenylimidazoline and combinations thereof, or an imidazole compound or an imidazoline compound represented by formula (II):

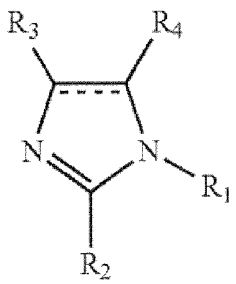

(II)

wherein $R_1$ represents a hydrogen atom, a C1-C10 alkyl group, an aryl group, an arylalkyl group, or a cyanoethyl group, and $R_2$ to $R_4$ each independently represent a hydrogen atom, a nitro group, a halogen atom, a C1-C20 alkyl group, a C1-C20 alkyl group substituted with a hydroxy group, an aryl group, an arylalkyl group, or a C1-C20 acyl group.

**3.** The epoxy resin composition according to claim 1 or 2, wherein the at least one compound includes a tetrakisphenol compound represented by the following formula (I):

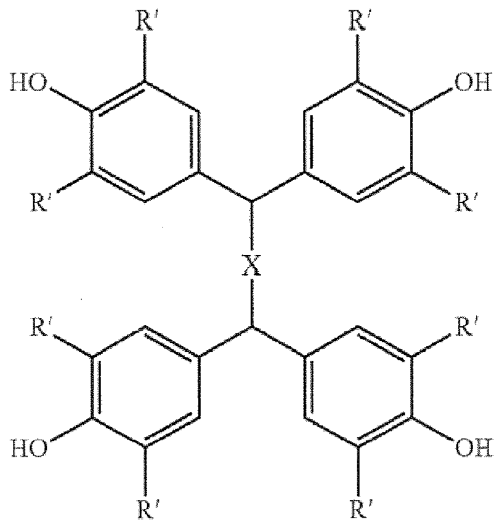

(I)

wherein X represents $(CH_2)_n$, n is 0, 1, 2, or 3; and each R' independently represents a hydrogen atom, a C1-C6 alkyl group, a phenyl group which optionally has at least one substituent, a halogen atom or a C1-C alkoxy group or one compound includes an aromatic carboxylic acid compound, preferably the aromatic carboxylic acid compound is an isophthalic acid compound represented by formula (III):

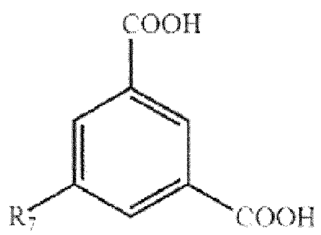

(III)

wherein $R^7$ represents a C1-C6 alkyl group, a C1-C6 alkoxy group, a nitro group, or a hydroxy group, more preferably the isophthalic acid compound is 5-t-butyl isophthalic acid, 5-nitroisophthalic acid, or 5-hydroxyisophthalic acid.

**4.** The epoxy resin composition of any one of claims 1-3, wherein the epoxy resin composition reaches a cure degree of at least 10 % after heating at 163 °C for 0.5 minutes or the epoxy resin composition reaches a cure degree of at least 50 % after heating at 163 °C for 2 minutes, wherein the cure degree is determined as indicated in the description.

5. The epoxy resin composition of any one of claims 1-4, wherein the epoxy resin composition has a viscosity increase less than 3 times the starting viscosity when held at 65°C for 2 hours, wherein the viscosity increase is determined as indicated in the description.

6. The epoxy resin composition of any one of claims 1-5, wherein the aromatic urea is present in an amount ranging from 0.5 to 7 PHR per 100 PHR of total epoxy resin and/or the dicyandiamide is present in an amount ranging from 3 to 7 PHR per 100 PHR of total epoxy resin.

7. The epoxy resin composition of any one of claims 1-6, comprising an epoxy resin which has a Tg of 120 °C or more when fully cured, preferably an epoxy resin which has a Tg of 150 °C or more when fully cured, wherein the Tg is determined as indicated in the description.

8. The epoxy resin composition of claim 7, wherein the epoxy resin having a Tg of 150 °C or more when fully cured is selected from at least one of triglycidyl amines, tetraglycidyl amines, naphthalene epoxy resins, epoxy resins having a biphenyl skeleton, isocyanate-modified epoxy resins, alicyclic epoxy resins or triphenylmethane epoxy resins.

9. The epoxy resin composition of any one of claims 1-8, comprising a first bisphenol epoxy resin which has an EEW of 500 to 10000 g/eq, preferably an EEW of 500 to 1500 g/eq and which is present in an amount of 10 to 40 PHR per 100 PHR of total epoxy resin.

10. The epoxy resin composition of claim 9, further comprising a second bisphenol epoxy resin having an EEW of 150 to 200 g/eq.

11. The epoxy resin composition of any one of claims 1-10, wherein the at least one epoxy accelerator is present in an amount ranging from 1 to 5 % by weight based on the total weight of the epoxy resin composition.

12. The epoxy resin composition of any one of claims 1-11, further comprising a thermoplastic resin.

13. A prepreg comprising the epoxy resin composition of any one of claims 1-12.

14. A fiber-reinforced plastic material comprising the prepreg of claim 13 wherein the prepreg is cured.

**Patentansprüche**

1. Epoxidharz-Zusammensetzung, die Folgendes umfasst:

   (a) zumindest ein Epoxidharz;
   (b) zumindest ein Dicyandiamid;
   (c) zumindest einen aromatischen Harnstoff; und
   (d) zumindest einen Clathratkomplex, der (d1) zumindest eine aus Tetrakisphenol-Verbindungen ausgewählte Verbindung und (d2) zumindest einen aus der aus Imidazolen und Imidazolinen bestehenden Gruppe ausgewählten Epoxid-Beschleuniger umfasst.

2. Epoxidharz-Zusammensetzung nach Anspruch 1, wobei der zumindest eine Epoxid-Beschleuniger eine Imidazol-Verbindung oder eine Imidazolin-Verbindung, die aus der aus Imidazol, 2-Ethyl-4-methylimidazol, 1-Methylimidazol, 2-Methylimidazol, 4-Methylimidazol, 1,2-Dimethylimidazol, 1-Benzyl-2-methylimidazol, 2-Heptadecylimidazol, 2-Undecylimidazol, 2-Phenylimidazol, 2-Phenyl-4-methyl-5-hydroxymethylimidazol, 2-Methylimidazolin und 2-Phenylimidazolin sowie Kombinationen davon ausgewählt ist, oder eine Imidazol-Verbindung oder eine Imidazolin-Verbindung der Formel (II) umfasst:

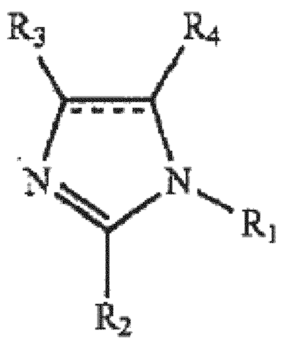

(II)

worin $R_1$ ein Wasserstoffatom, eine C1-C10-Alkylgruppe, eine Arylgruppe, eine Arylalkylgruppe oder eine Cyanomethylgruppe ist und $R_2$ bis $R_4$ jeweils unabhängig voneinander für ein Wasserstoffatom, eine Nitrogruppe, ein Halogenatom, eine C1-C20-Alkylgruppe, eine C1-C20-Alkylgruppe, die mit einer Hydroxygruppe substituiert ist, eine Arylgruppe, eine Arylalkylgruppe oder eine C1-C20-Acylgruppe sind.

**3.** Epoxidharz-Zusammensetzung nach Anspruch 1 oder 2, wobei die zumindest eine Verbindung eine Tetrakisphenol-Verbindung der folgenden Formel (I) umfasst:

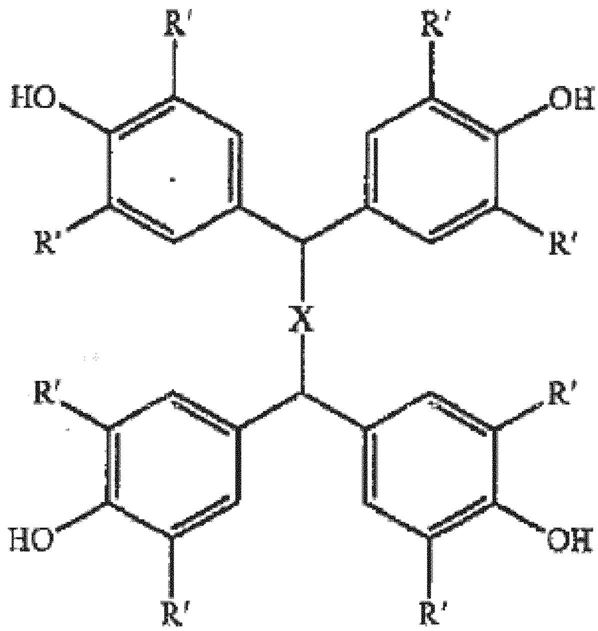

(I)

worin X für $(CH_2)_n$ steht, n = 0, 1, 2 oder 3 ist; und die R' jeweils unabhängig für ein Wasserstoffatom, eine C1-C6-Alkylgruppe, eine Phenylgruppe, die gegebenenfalls zumindest einen Substituenten aufweist, ein Halogenatom oder eine C1-C6-Alkoxygruppe stehen, oder eine Verbindung eine aromatische Carbonsäure-Verbindung enthält, wobei die aromatische Carbonsäure-Verbindung vorzugsweise eine Isophthalsäure-Verbindung der Formel (III) ist:

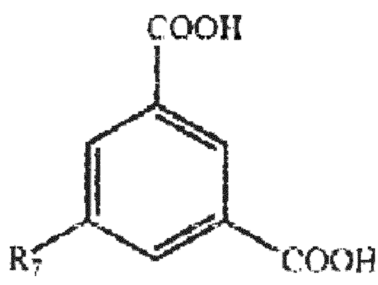

(III)

worin $R^7$ für ein C1-C6-Alkylgruppe, eine C1-C6-Alkoxygruppe, eine Nitrogruppe oder eine Hydroxygruppe steht,

wobei die Isophthalsäure-Verbindung noch bevorzugter 5-tert-Butylisophthalsäure, 5-Nitroisophthalsäure oder 5-Hydroxyisophthalsäure ist.

**4.** Epoxidharz-Zusammensetzung nach einem der Ansprüche 1 bis 3, wobei die Epoxidharz-Zusammensetzung nach 0,5 min Erhitzen auf 163 °C einen Härtungsgrad von zumindest 10 % erreicht oder die Epoxidharz-Zusammensetzung nach 2 min Erhitzen auf 163 °C einen Härtungsgrad von zumindest 50 % erreicht, wobei der Härtungsgrad wie in der Beschreibung angegeben bestimmt wird.

**5.** Epoxidharz-Zusammensetzung nach einem der Ansprüche 1 bis 4, wobei die Epoxidharz-Zusammensetzung eine Viskositätserhöhung von weniger als das 3-Fache der Anfangsviskosität aufweist, wenn sie 2 h lang auf 65 °C gehalten wird, wobei die Viskositätserhöhung wie in der Beschreibung angegeben bestimmt wird.

**6.** Epoxidharz-Zusammensetzung nach einem der Ansprüche 1 bis 5, worin der aromatische Harnstoff in einer Menge im Bereich von 0,5 bis 7 PHR pro 100 PHR des gesamten Epoxidharzes vorliegt und/oder das Dicyandiamid in einer Menge von 3 bis 7 PHR pro 100 PHR des gesamten Epoxidharzes vorliegt.

**7.** Epoxidharz-Zusammensetzung nach einem der Ansprüche 1 bis 6, die ein Epoxidharz mit einer Tg von 120 °C oder mehr umfasst, wenn sie vollständig gehärtet ist, vorzugsweise ein Epoxidharz mit einer Tg von 150 °C oder mehr, wenn sie vollständig gehärtet ist, wobei die Tg wie in der Beschreibung beschrieben bestimmt wird.

**8.** Epoxidharz-Zusammensetzung nach Anspruch 7, wobei das Epoxidharz mit einer Tg von 150 °C oder mehr, wenn es vollständig gehärtet ist, aus zumindest einem aus Triglycidylaminen, Tetraglycidylaminen, Naphthalin-Epoxidharzen, Epoxidharzen mit einem Biphenylskelett, Isocyanat-modifizierten Epoxidharzen, alizyklischen Epoxidharzen oder Triphenylmethan-Epoxidharzen ausgewählt ist.

**9.** Epoxidharz-Zusammensetzung nach einem der Ansprüche 1 bis 8, die ein erstes Bisphenol-Epoxidharz mit einem EEW von 500 bis 10.000 g/Äqu., vorzugsweise einem EEW von 500 bis 1.500 g/Äqu., umfasst, das in einer Menge von 10 bis 40 PHR pro 100 PHR des gesamten Epoxidharzes vorliegt.

**10.** Epoxidharz-Zusammensetzung nach Anspruch 9, die weiters ein zweites Bisphenol-Epoxidharz mit einem EEW von 150 bis 200 g/Äqu. aufweist.

**11.** Epoxidharz-Zusammensetzung nach einem der Ansprüche 1 bis 10, wobei der zumindest eine Epoxid-Beschleuniger in einer Menge im Bereich von 1 bis 5 Gew.-%, bezogen auf das Gesamtgewicht der Epoxidharz-Zusammensetzung, vorliegt.

**12.** Epoxidharz-Zusammensetzung nach einem der Ansprüche 1 bis 11, die weiters ein thermoplastisches Harz umfasst.

**13.** Prepreg, das eine Epoxidharz-Zusammensetzung nach einem der Ansprüche 1 bis 12 umfasst.

**14.** Faserverstärktes Kunststoffmaterial, das ein Prepreg nach Anspruch 13 umfasst, wobei das Prepreg gehärtet ist.

## Revendications

**1.** Composition de résine époxy comprenant :

(a) au moins une résine époxy ;
(b) au moins un dicyandiamide ;
(c) au moins une urée aromatique ; et
(d) au moins un complexe de clathrate comprenant (d1) au moins un composé choisi parmi des composés de tétrakisphénol et (d2) au moins un accélérateur époxy choisi dans le groupe constitué d'imidazoles et d'imidazolines.

**2.** Composition de résine époxy selon la revendication 1, dans laquelle le au moins un accélérateur époxy comprend un composé d'imidazole ou un composé d'imidazoline sélectionné dans le groupe constitué de l'imidazole, du 2-éthyl-4-méthylimidazole, du 1-méthylimidazole, du 2-méthylimidazole, du 4-méthylimidazole, du 1,2-diméthylimidazole, du 1-benzyl-2-méthylimidazole, du 2-heptadécylimidazole, du 2-undécylimidazole, du 2-phénylimidazole, du

2-phényl-4-méthyl-5-hydroxyméthylimidazole, de la 2-méthylimidazoline et de la 2-phénylimidazoline et de combinaisons de ceux-ci, ou un composé d'imidazole ou un composé d'imidazoline représenté par la formule (II) :

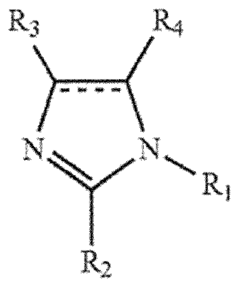

(II)

dans laquelle $R_1$ représente un atome d'hydrogène, un groupe alkyle en C1-C10, un groupe aryle, un groupe arylalkyle ou un groupe cyanoéthyle, et $R_2$ à $R_4$ représentent chacun indépendamment un atome d'hydrogène, un groupe nitro, un atome d'halogène, un groupe alkyle en C1-C20, un groupe alkyle en C1-C20 substitué par un groupe hydroxy, un groupe aryle, un groupe arylalkyle ou un groupe acyle en C1-C20.

3. Composition de résine époxy selon la revendication 1 ou 2, dans laquelle le au moins un composé comprend un composé de tétrakisphénol représenté par la formule (I) suivante :

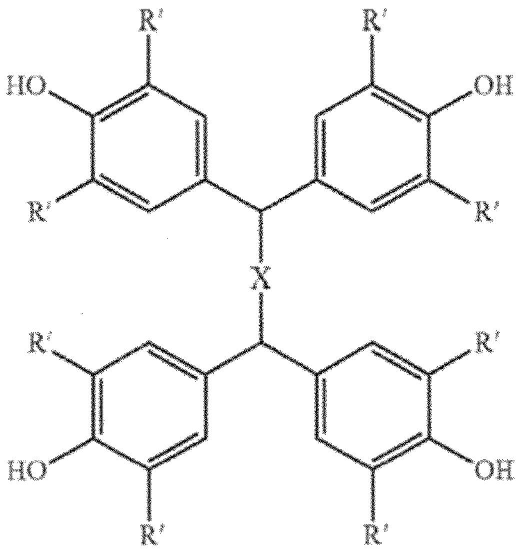

(I)

dans laquelle X représente $(CH_2)_n$, n est 0, 1, 2 ou 3 ; et chaque R' représente indépendamment un atome d'hydrogène, un groupe alkyle en C1-C6, un groupe phényle qui a facultativement au moins un substituant, un atome d'halogène ou un groupe alcoxy en C1-C ou un composé comprend un composé d'acide carboxylique aromatique, de préférence le composé d'acide carboxylique aromatique est un composé d'acide isophtalique représenté par la formule (III) :

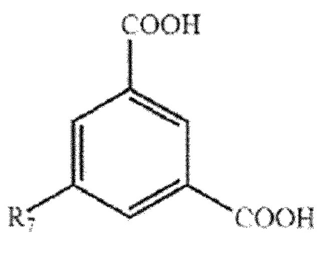

(III)

dans laquelle $R^7$ représente un groupe alkyle en C1-C6, un groupe alcoxy en C1-C6, un groupe nitro ou un groupe hydroxy, de manière plus préférée le composé d'acide isophtalique est l'acide 5-t-butyl isophtalique, l'acide 5-nitroisophtalique ou l'acide 5-hydroxyisophtalique.

4. Composition de résine époxy selon l'une quelconque des revendications 1 à 3, dans laquelle la composition de résine époxy atteint un degré de durcissement d'au moins 10 % après chauffage à 163°C pendant 0,5 minute ou la composition de résine époxy atteint un degré de durcissement d'au moins 50 % après chauffage à 163°C pendant 2 minutes, dans laquelle le degré de durcissement est déterminé comme indiqué dans la description.

5. Composition de résine époxy selon l'une quelconque des revendications 1 à 4, dans laquelle la composition de résine époxy a une augmentation de viscosité inférieure à 3 fois la viscosité de départ lorsqu'elle est maintenue à 65°C pendant 2 heures, dans laquelle l'augmentation de viscosité est déterminée comme indiqué dans la description.

6. Composition de résine époxy selon l'une quelconque des revendications 1 à 5, dans laquelle l'urée aromatique est présente en une quantité dans la plage de 0,5 à 7 PHR pour 100 PHR de résine époxy totale et/ou le dicyandiamide est présent en une quantité dans la plage de 3 à 7 PHR pour 100 PHR de résine époxy totale.

7. Composition de résine époxy selon l'une quelconque des revendications 1 à 6, comprenant une résine époxy qui a une Tg de 120°C ou plus lorsqu'elle est complètement durcie, de préférence une résine époxy qui a une Tg de 150°C ou plus lorsqu'elle est complètement durcie, dans laquelle la Tg est déterminée comme indiqué dans la description.

8. Composition de résine époxy selon la revendication 7, dans laquelle la résine époxy ayant une Tg de 150°C ou plus lorsqu'elle est complètement durcie est choisie parmi au moins certaines parmi les triglycidylamines, les tétraglycidylamines, les résines époxy de naphtalène, les résines époxy ayant un squelette de biphényle, les résines époxy modifiées par un isocyanate, les résines époxy alicycliques ou les résines époxy de triphénylméthane.

9. Composition de résine époxy selon l'une quelconque des revendications 1 à 8, comprenant une première résine époxy de bisphénol qui a un EEW de 500 à 10 000 g/éq, de préférence un EEW de 500 à 1 500 g/éq et qui est présente en une quantité de 10 à 40 PHR pour 100 PHR de résine époxy totale.

10. Composition de résine époxy selon la revendication 9, comprenant en outre une seconde résine époxy de bisphénol ayant un EEW de 150 à 200 g/éq.

11. Composition de résine époxy selon l'une quelconque des revendications 1 à 10, dans laquelle le au moins un accélérateur époxy est présent en une quantité dans la plage de 1 à 5 % en poids sur la base du poids total de la composition de résine époxy.

12. Composition de résine époxy selon l'une quelconque des revendications 1 à 11, comprenant en outre une résine thermoplastique.

13. Préimprégné comprenant la composition de résine époxy selon l'une quelconque des revendications 1 à 12.

14. Matière plastique renforcée de fibres comprenant le préimprégné selon la revendication 13, dans lequel le préimprégné est durci.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014107725 A
- EP 1279688 A
- US 7005185 B2
- US 20030082385 A1
- US 8653160 B
- US 6727325 B
- US 8735529 B